# EUROPEAN PATENT APPLICATION

(11) **EP 4 823 124 A1**
(43) Date of publication of application: **14.10.2026**
(21) Application number: 24899731.4
(22) Date of filing: 29.11.2024
(51) Int. Cl.: H04W 4/02

(54) **POSITION INFORMATION REPORTING OR RECEIVING METHODS, TERMINAL, AND NETWORK-SIDE DEVICE**

(30) Priority: 05.12.2023 CN 202311657234
(71) Applicant: Vivo Mobile Communication Co., Ltd., Dongguan, Guangdong 523863 (CN)
(72) Inventor: HE, Ranran, Dongguan, Guangdong 523863 (CN); ZHANG, Yanxia, Dongguan, Guangdong 523863 (CN); MO, Yitao, Dongguan, Guangdong 523863 (CN)
(74) Representative: Walaski, Jan Filip
(86) International application number: PCT/CN2024/135590
(87) International publication number: WO 2025/119091

(57) **Abstract**

The embodiments of the present application belong to the technical field of communications. Disclosed are position information reporting or receiving methods, a terminal, and a network-side device. A position information reporting method in the embodiments of the present application comprises: a terminal acquiring first information, which is used for instructing the terminal to report position information of the terminal; and on the basis of the first information, the terminal executing any one of the following: not reporting the position information of the terminal, or reporting the position information of the terminal, wherein AS security of the terminal is not used or is not activated.

## Description

### CROSS-REFERENCE TO RELATED APPLICATIONS

This application claims priority to Chinese patent application No. 2023116572349, filed in China on December 5, 2023, and entitled "METHOD FOR REPORTING OR RECEIVING LOCATION INFORMATION, TERMINAL, AND NETWORK SIDE DEVICE", which is incorporated herein by reference in its entirety.

### TECHNICAL FIELD

This application relates to the field of communication technologies, and in particular, to a method for reporting or receiving location information, a terminal, and a network side device.

### BACKGROUND

It is crucial for a network to learn of location information of a terminal, for example, helping the network to perform mobility management and the like on the terminal. The terminal needs access stratum (Access Stratum, AS) security to send the location information through radio resource control (Radio Resource Control, RRC) signaling. However, some terminals (such as a narrowband Internet-of-Things device supporting only CP optimization) do not have the AS security. Therefore, a technical problem that needs to be resolved in the related art is how to report the location information of the terminal in the absence of the AS security.

### SUMMARY

Embodiments of this application provide a method for reporting or receiving location information, a terminal, and a network side device, which can resolve a problem of failing to determine how to process location information of a terminal in the absence of AS security.

According to a first aspect, a method for reporting location information is provided, including: A terminal obtains first information, where the first information indicates the terminal to report location information of the terminal; and the terminal performs any one of the following based on the first information: skipping reporting the location information of the terminal; or reporting the location information of the terminal, where access stratum AS security of the terminal is not used or the AS security is not activated.

According to a second aspect, a method for reporting location information is provided, including: An access network device sends first information, where the first information indicates a terminal to report location information of the terminal, and the reporting, by the terminal, the location information of the terminal includes: reporting the location information of the terminal when the AS security of the terminal is not used or the AS security is not activated.

According to a third aspect, a method for receiving location information is provided, including: A core network device receives fifth information from an access network device, where the fifth information includes location information of a terminal, and AS security of the terminal is not used or the AS security is not activated.

According to a fourth aspect, an apparatus for reporting location information is provided, applied to a terminal and including: an obtaining module, configured to obtain first information, where the first information indicates the terminal to report location information of the terminal; and a processing module, configured to perform any one of the following based on the first information: skipping reporting the location information of the terminal; or reporting the location information of the terminal; where access stratum AS security of the terminal is not used or the AS security is not activated.

According to a fifth aspect, an apparatus for reporting location information is provided, applied to an access network device. The apparatus includes: a sending module, configured to send first information, where the first information indicates a terminal to report location information of the terminal, and the reporting, by the terminal, the location information of the terminal includes reporting the location information of the terminal when AS security of the terminal is not used or the AS security is not activated.

According to a sixth aspect, an apparatus for receiving location information is provided, applied to a core network device. The apparatus includes: a receiving module, configured to receive fifth information from an access network device, where the fifth information includes location information of a terminal, and AS security of the terminal is not used or the AS security of the terminal is not activated.

According to a seventh aspect, a terminal is provided. The terminal includes a processor and a memory. The memory stores a program or instructions executable in the processor. The program or the instructions, when executed by the processor, implement the steps of the method according to the first aspect.

According to an eighth aspect, a terminal is provided, including a processor and a communication interface. The communication interface is configured to obtain first information. The first information indicates the terminal to report location information of the terminal. Any one of the following is performed based on the first information: skipping reporting the location information of the terminal; or reporting the location information of the terminal; where access stratum AS security of the terminal is not used, or the AS security is not activated.

According to a ninth aspect, a network side device is provided. The network side device includes a processor and a memory. The memory stores a program or instructions executable in the processor. The program or the instructions, when executed by the processor, implement the steps of the method according to the second aspect or the third aspect.

According to a tenth aspect, a network side device is provided, including a processor and a communication interface. The communication interface is configured to send first information, where the first information indicates a terminal to report location information of the terminal. The reporting, by the terminal, the location information of the terminal includes: reporting the location information of the terminal when AS security of the terminal is not used or the AS security is not activated; or the communication interface is configured to receive fifth information from an access network device. The fifth information includes location information of a terminal, where AS security of the terminal is not used or the AS security of the terminal is not activated.

According to an eleventh aspect, a readable storage medium is provided. The readable storage medium stores a program or instructions. The program or the instructions, when executed by a processor, implement steps of the method according to the first aspect, the second aspect, or the third aspect.

According to a twelfth aspect, a wireless communication system is provided, including: a terminal, an access network device, and a core network device. The terminal may be configured to perform steps of the method according to the first aspect, the access network device may be configured to perform steps of the method according to the second aspect, and the core network device may be configured to perform steps of the method according to the third aspect.

According to a thirteenth aspect, a chip is provided. The chip includes a processor and a communication interface. The communication interface is coupled to the processor. The processor is configured to run a program or instructions, to implement the steps of the method according to the first aspect, the second aspect, or the third aspect.

According to a fourteenth aspect, a computer program/program product is provided. The computer program/program product is stored in a storage medium. The computer program/program product is executed by at least one processor to implement the steps of the method according to the first aspect, the second aspect, or the third aspect.

In embodiments of this application, when the AS security of the terminal is not used or the AS security is not activated, if a network indicates the terminal to report the location information, the terminal may not report the location information, which is beneficial to protecting privacy of the terminal. The terminal may further report the location information, which is beneficial to assisting a network side in performing mobility management on the terminal, thereby improving performance of a communication system.

### BRIEF DESCRIPTION OF THE DRAWINGS

FIG. 1 is a schematic diagram of a wireless communication system according to an embodiment of this application;
FIG. 2 is a schematic flowchart of a method for reporting location information according to an embodiment of this application;
FIG. 3 is a schematic flowchart of a method for reporting location information according to an embodiment of this application;
FIG. 4 is a schematic flowchart of a method for receiving location information according to an embodiment of this application;
FIG. 5 is a schematic flowchart of a method for reporting location information according to an embodiment of this application;
FIG. 6 is a schematic flowchart of a method for reporting location information according to an embodiment of this application;
FIG. 7 is a schematic flowchart of a method for reporting location information according to an embodiment of this application;
FIG. 8 is a schematic flowchart of a method for reporting location information according to an embodiment of this application;
FIG. 9 is a schematic structural diagram of an apparatus for reporting location information according to an embodiment of this application;
FIG. 10 is a schematic structural diagram of an apparatus for reporting location information according to an embodiment of this application;
FIG. 11 is a schematic structural diagram of an apparatus for receiving location information according to an embodiment of this application;
FIG. 12 is a schematic structural diagram of a communication device according to an embodiment of this application;
FIG. 13 is a schematic structural diagram of a terminal according to an embodiment of this application;
FIG. 14 is a schematic structural diagram of a network side device according to an embodiment of this application; and
FIG. 15 is a schematic structural diagram of a network side device according to an embodiment of this application.

### DETAILED DESCRIPTION

Technical solutions in embodiments of this application are clearly described below with reference to drawings in embodiments of this application. Apparently, the described embodiments are merely some rather than all embodiments of this application. All other embodiments obtained by a person of ordinary skill in the art based on embodiments of this application fall within the protection scope of this application.

Terms "first", "second", and the like in this application are used for distinguishing between similar objects rather than describing a specific order or sequence. It should be understood that the terms used in this way may be transposed where appropriate, so that embodiments of this application can be implemented in a sequence other than those illustrated or described herein. In addition, objects defined by "first" and "second" are generally of the same class and do not limit a quantity of objects. For example, one or more first objects may be arranged. In addition, "or" in this application indicates at least one of connected objects. For example, "A or B" encompasses three solutions: solution 1: A is included but B is not included; solution 2: B is included but A is not included; and solution 3: both A and B are included. A character "/" generally indicates an "or" relationship between associated objects.

A term "indication" in this application may be a direct indication (or an explicit indication) or an indirect indication (or an implicit indication). The direct indication may be understood as that a sending party clearly informs a receiving party of specific information, an operation to be performed, or a request result in the sent indication. The indirect indication may be understood as that the receiving party determines corresponding information based on an indication sent by the sending party, or makes a determination and determines, based on a determining result, an operation that needs to be performed or a request result.

It should be noted that the technology described in embodiments of this application may be applied to a long term evolution (Long Term Evolution, LTE)/LTE-advanced (LTE-Advanced, LTE-A) system, and may be further applied to another wireless communication system, such as a code division multiple access (Code Division Multiple Access, CDMA) system, a time division multiple access (Time Division Multiple Access, TDMA) system, a frequency division multiple access (Frequency Division Multiple Access, FDMA) system, an orthogonal frequency division multiple access (Orthogonal Frequency Division Multiple Access, OFDMA) system, a single-carrier frequency division multiple access (Single-carrier Frequency Division Multiple Access, SC-FDMA) system, or another system. Terms "system" and "network" in embodiments of this application are usually used interchangeably, and the described technology may be used for both the system and the radio technology mentioned above, or may be used for another system and another radio technology. The following description describes a new radio (New Radio, NR) system for exemplary purposes, and the term NR is used in most of the following description. Nevertheless, these technologies may also be applied in a system other than the NR system, such as a 6^{th} generation (6^{th} Generation, 6G) communication system.

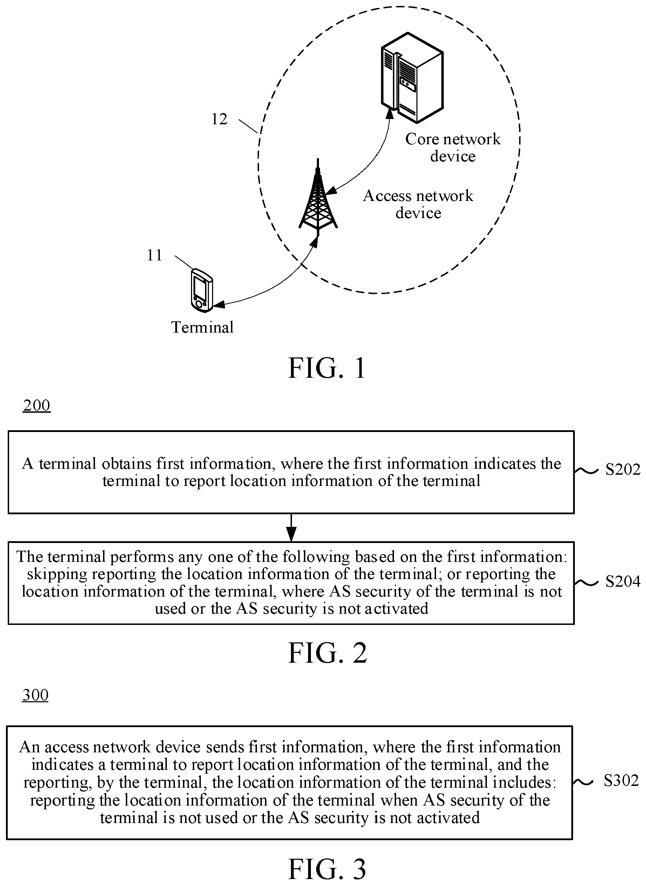

FIG. 1 is a block diagram of a wireless communication system to which embodiments of this application may be applied. The wireless communication system includes a terminal 11 and a network side device 12. The terminal 11 may be a terminal-side device such as a mobile phone, a tablet computer (Tablet Personal Computer), a laptop computer (Laptop Computer), a notebook computer, a personal digital assistant (Personal Digital Assistant, PDA), a palmtop computer, a netbook, an ultra-mobile personal computer (Ultra-mobile Personal Computer, UMPC), a mobile internet device (Mobile Internet Device, MID), an augmented reality (Augmented Reality, AR) device, a virtual reality (Virtual Reality, VR) device, a robot, a wearable device (Wearable Device), a flight vehicle (flight vehicle), an on-board device (Vehicle User Equipment, VUE), a shipborne device, a pedestrian terminal (Pedestrian User Equipment, PUE), a smart home appliance (a home device with a wireless communication capability, such as a refrigerator, a television, a washing machine, or furniture), a game console, a personal computer (Personal Computer, PC), a teller machine, or a self-service machine. The wearable device includes a smart watch, a smart bracelet, a smart headset, smart glasses, smart jewelry (a smart bracelet, a smart chain bracelet, a smart ring, a smart necklace, a smart ankle bangle, a smart ankle chain, and the like), a smart wristband, smart clothing, and the like. The on-board device may also be referred to as an on-board terminal, an on-board controller, an on-board module, an on-board component, an on-board chip, an on-board unit, or the like. It should be noted that a specific type of the terminal 11 is not limited in embodiments of this application. The network side device 12 may include an access network device or a core network device. The access network device may also be referred to as a radio access network (Radio Access Network, RAN) device, a wireless access network function, or a wireless access network unit. The access network device may include a base station, a wireless local area network (Wireless Local Area Network, WLAN) access point (Access Point, AS), a wireless fidelity (Wireless Fidelity, Wi-Fi) node, or the like. The base station may be referred to as a node B (Node B, NB), an evolved Node B (Evolved Node B, eNB), a next generation Node B (the next generation Node B, gNB), a new radio Node B (New Radio Node B, NR Node B), an access point, a relay base station (Relay Base Station, RBS), a serving base station (Serving Base Station, SBS), a base transceiver station (Base Transceiver Station, BTS), a radio base station, a radio transceiver, a basic service set (Basic Service Set, BSS), an extended service set (Extended Service Set, ESS), a home node B (home Node B, HNB), a home evolved node B (home evolved Node B), a transmission receiving point (Transmission Reception Point, TRP), or another appropriate term in the art. The base station is not limited to a specific technical term, as long as the same technical effect can be achieved. It should be noted that, in this embodiment of this application, only a base station in an NR system is used as an example for description, and a specific type of the base station is not limited.

The core network device may include, but is not limited to, at least one of the following: a core network node, a core network function, a mobility management entity (Mobility Management Entity, MME), an access and mobility management function (Access and Mobility Management Function, AMF), a session management function (Session Management Function, SMF), a user plane function (User Plane Function, UPF), a policy control function (Policy Control Function, PCF), a policy and charging rules function (Policy and Charging Rules Function, PCRF), an edge application server discovery function (Edge Application Server Discovery Function, EASDF), unified data management (Unified Data Management, UDM), a unified data repository (Unified Data Repository, UDR), a home subscriber server (Home Subscriber Server, HSS), a centralized network configuration (Centralized network configuration, CNC), a network repository function (Network Repository Function, NRF), a network exposure function (Network Exposure Function, NEF), a local NEF (Local NEF, or L-NEF), a binding support function (Binding Support Function, BSF), an application function (Application Function, AF), and the like. It should be noted that in embodiments of this application, only a core network device in the NR system is used as an example for description, and a specific type of the core network device is not limited. The core network device is not limited to at least one of the following: a core network node, a core network function, a mobility management entity (Mobility Management Entity, MME), an access and mobility management function (Access and Mobility Management Function, AMF), a session management function (Session Management Function, SMF), a user plane function (User Plane Function, UPF), a policy control function (Policy Control Function, PCF), a policy and charging rules function (Policy and Charging Rules Function, PCRF), an edge application server discovery function (Edge Application Server Discovery Function, EASDF), unified data management (Unified Data Management, UDM), a unified data repository (Unified Data Repository, UDR), a home subscriber server (Home Subscriber Server, HSS), a centralized network configuration (Centralized network configuration, CNC), a network repository function (Network Repository Function, NRF), a network exposure function (Network Exposure Function, NEF), a local NEF (Local NEF, or L-NEF), a binding support function (Binding Support Function, BSF), an application function (Application Function, AF), and the like. It should be noted that in embodiments of this application, only the core network device in the NR system is used as an example for description, and the specific type of the core network device is not limited.

A method for reporting location information provided in embodiments of this application is described below in detail through some embodiments and application scenarios thereof with reference to the drawings.

As shown in FIG. 2, an embodiment of this application provides a method 200 for reporting location information (which may also be understood as a method for determining whether to report location information). The method may be performed by a terminal. In other words, the method may be performed by software or hardware installed in the terminal. The method includes the following steps.

S202: A terminal obtains first information, where the first information indicates the terminal to report location information of the terminal.

In this embodiment, the terminal may receive the first information from an access network device. Certainly, the terminal may further obtain the first information in another manner. For example, the terminal obtains predefined first information, and the first information may be specified in a protocol.

The first information may include a first indication, and the first indication may indicate one of the following: a network requests the terminal to report the location information; or the network enables the terminal to report the location information.

The first indication may enable an indication through an explicit manner. The first indication may be represented by using 1 bit. An example in which the first indication is used for the network to enable the terminal to report the location information is used. Specifically, for example, if a value of the bit is 1, it indicates that the network enables the terminal to report the location information of the terminal. If the value of the bit is 0, it indicates that the network enables the terminal not to report the location information of the terminal. For another example, if the bit exists and has a value that is true, it indicates that the network enables the terminal to report the location information of the terminal. For another example, if the value of the bit is 1, it indicates that the network enables the terminal to report the location information of the terminal. If the value of the bit is false, it indicates that the network enables the terminal not to report the location information of the terminal.

Optionally, the first information may further include at least one of the following: 1) first area information, where the first area information indicates an area in which the terminal needs to report the location information of the terminal; or 2) service-related information, where the service-related information indicates under what service scenarios is it required to report the location information by the terminal.

It may be understood that the first indication may enable an indication through an implicit manner. For example, if the first information includes any information related to location reporting (for example, the first area information and/or service-related information), it may implicitly indicate that the network requests the terminal to report the location information of the terminal, or it may implicitly indicate that the network enables the terminal to report the location information of the terminal.

The first area information includes at least one of the following: 1) at least one tracking area identifier (Tracking Area identifier, TAI); 2) at least one cell global identifier (Cell Global Identifier, CGI); 3) at least one piece of second information, where the second information includes carrier frequency information and at least one physical cell identifier (Physical Cell Identifier, PCI); 4) at least one geographical location area; or 5) at least one radio access network (Radio Access Network, RAN) area.

The geographical location area may be identified through a reference point (indicated by a geographical coordinate) and a distance threshold, and the geographical location area may also be identified through a plurality of geographical coordinates.

The service-related information may indicate at least one of the following: an emergency service (emergency), a high-priority access service (highPriorityAccess, related to AC 11.15), a mobile terminating-access service (Mobile Terminating-Access, mt-Access), a mobile originating-signalling service (Mobile Originating-Signalling, mo-Signalling), a mobile originating-data service (mo-Data), a delay-tolerant access service (delayTolerantAccess-v1020), a voice call service (mo-VoiceCall-v1280), a delay-sensitive service, a conversational service, a streaming service, an interactive service, or a background service.

Optionally, the first information is carried via system information, a paging message, or dedicated signaling. For details, reference may be made to description of Embodiment 5 below.

Optionally, that the first information is carried via the system information includes: the first information is carried via a system information block 1 (System Information Block 1, SIB1) or through a first system information block. The first system information block includes satellite assistance information. For example, in an NR system, the first information is carried via the SIB1 or SIB19. In an evolved UMTS terrestrial radio access network (E-UTRAN) system, the first information may be carried via SystemInformationBlockType1, SystemInformationBlockType1-MBMS, SystemInformationBlockType1-BR, SystemInformationBlockType31, or SystemInformationBlockType31-NB.

Optionally, that the first information is carried via the SIB1 includes: the first information is carried via a first field in the SIB1 and one of the following is satisfied: 1) the first field is parallel to a second field in the SIB1; 2) the first field is included in the second field, and the first field is common for all networks, that is, associated with all networks, and the network includes at least one of a public land mobile network (PLMN) or a non-public network (NPN); or 3) the first field is included in the second field, the first field is dedicated to each network, and the network includes at least one of the PLMN or the NPN. The second field indicates cell access-related information. For details, reference may be made to description in Embodiment 5 below.

Optionally, that the first information is carried via the first system information block includes: the first information is carried via a third field in the first system information block and one of the following is satisfied: 1) the third field is parallel to a fourth field; or 2) the third field is included in the fourth field. The fourth field indicates a satellite-related parameter required for accessing a serving cell. For details, reference may be made to description in Embodiment 5 below.

S204: The terminal performs any one of the following based on the first information: skipping reporting the location information of the terminal; or reporting the location information of the terminal, where access stratum (Access Stratum, AS) security of the terminal is not used or the AS security is not activated.

In this embodiment, after the terminal obtains the first information through S202, the terminal may determine whether the location information needs to be reported, and then performs S204.

In this embodiment, the terminal may not report the location information of the terminal, which is beneficial to protecting privacy of a user.

In this embodiment, the terminal may report the location information of the terminal, which is beneficial to assisting a network side in performing mobility management on the terminal, thereby improving performance of a communication system. Optionally, security processing may be performed by a non-access stratum (Non-Access Stratum, NAS) on the location information reported by the terminal, which is beneficial to protecting privacy of the terminal.

Optionally, the location information of the terminal includes at least one of the following: rough location information; or precise location information.

The rough location information is a coordinate point used for describing a geographical shape, for example, using Ellipsoid-Point encoding. The precise location information is, for example, represented through a CommonLocationInfo IE.

It may be understood that, to enable a network side to obtain the location information of the terminal as early as possible (for example, when an initial connection is established), it is helpful for the network side to determine whether a service being provided for the terminal is allowed. In the related art, before establishment of an initial connection is completed, AS security is not activated either, and reporting of location information before the establishment of the initial connection is completed is not supported currently either. To resolve the technical problem, the reporting location information of the terminal in this embodiment further includes: reporting the location information of the terminal in a first process, where the first process includes at least one of a radio resource control (Radio Resource Control, RRC) setup procedure, an RRC connection resume procedure, an RRC connection reestablishment procedure, a handover procedure, or an early data transmission (Early Data Transmission, EDT) procedure. In this embodiment, the network side may obtain the location information of the terminal as early as possible, which is beneficial to the network side for determining as early as possible whether a service being provided for the terminal is allowed.

According to the method for reporting location information provided in this embodiment of this application, when the AS security of the terminal is not used or the AS security is not activated, if a network indicates the terminal to report the location information, the terminal may not report the location information, which is beneficial to protecting privacy of the terminal. The terminal may further report the location information, which is beneficial to assisting a network side in performing mobility management on the terminal, thereby improving performance of a communication system.

Optionally, the method provided in the foregoing embodiments may further include the following step: the terminal performs at least one of the following when the terminal obtains the first information from a first cell and a first condition is satisfied: considering that 1) the first cell is a suitable cell; 2) considering that the first cell is a candidate cell for cell selection or reselection; or 3) considering that the first cell is not barred. The first condition includes at least one of the following: 1) the terminal has a first capability; 2) the terminal decides to report the location information of the terminal; 3) the terminal does not wish to report the location information of the terminal; or 4) the location information of the terminal is available. This embodiment may be applicable to a case that the terminal reports the location information in S204.

Optionally, in parallel with the previous embodiment, the method provided in this embodiment may further include the following steps: the terminal performs at least one of the following when the terminal obtains the first information from a first cell and a second condition is satisfied: 1) considering that the first cell is not a suitable cell; 2) considering that the first cell is not a candidate cell for cell selection or reselection; 3) considering that the first cell is barred; 4) considering that the first cell is barred within a first time; or 5) considering that a limited service is available only on the first cell. The second condition includes at least one of the following: 1) the terminal does not have a first capability; 2) the terminal decides not to report the location information of the terminal; 3) the terminal does not wish to report the location information of the terminal; or 4) the location information of the terminal is not available. This embodiment may be applicable to a case that the terminal does not report the location information in S204.

The first capability mentioned in the foregoing two embodiments may include at least one of the following: 1) a capability of reporting the location information of the terminal when the AS security is not used or the AS security is not activated; or 2) a capability of reporting the location information of the terminal in the first process. The first process includes at least one of an RRC setup procedure, an RRC connection resume procedure, an RRC connection reestablishment procedure, a handover procedure, or an EDT procedure.

The first capability is an optional terminal capability, and is not indicated for a network side. namely, an optional terminal capability without signaling.

Optionally, in the foregoing embodiments, when the terminal does not report the location information of the terminal, the method further includes: sending, by the terminal, third information. The third information indicates at least one of the following: 1) the terminal does not wish to report the location information of the terminal; 2) the terminal decides not to report the location information of the terminal; or 3) the location information of the terminal is not available. This embodiment facilitates that a network learns in time whether a terminal reports location information and further performs a subsequent decision, for example, determine whether to receive the location information of the terminal, and whether to continue to trigger the terminal to send the location information.

Optionally, the third information sent by the terminal may include at least one of the following:
1) Information about a second time. The information about the second time indicates a time when the terminal does not wish to report the location information of the terminal, or indicating a time when the terminal decides not to report the location information of the terminal, or indicating a time when the location information of the terminal is not available. The time may be a time stamp (a specific time), a time interval, or the like. For the time stamp, the time may be represented by using an absolute time (for example, UTC), or may be represented by using a relative time, for example, may be represented by using at least one of a frame number, a sub-frame number, a time slot, or a symbol. The time is defined with reference to a serving cell. For the time interval, the time may be represented through a start time and an end time, or may be represented through the start time and a time interval. Similarly, the start time and the end time may be represented through the absolute time or the relative time.
2) Second area information. The second area information indicates an area where the terminal does not wish to report the location information of the terminal, or an area where the terminal decides not to report the location information of the terminal, or an area where the location information of the terminal is not available. For example, the second area information includes at least one of the following: at least one tracking area identifier TAI; at least one cell global identifier CGI; at least one piece of carrier frequency information; at least one physical cell identifier PCI; at least one geographical location area; or at least one radio access network RAN area.

The foregoing third information may be reported in Msg3 or Msg5. The third information may be RRC information, or a new MAC CE may be introduced to include the second information. It may be understood that content of the second information may be null. To be specific, the second information does not include the information about the second time and the second area information. The MAC CE is marked by a MAC PDU subheader having an LCID or an eLCID, and has a fixed size of zero bits (It has a fixed size of zero bits).

Optionally, when the terminal sends the third information to an access network device, the method further includes: an NAS of the terminal indicates the third information to an AS of the terminal.

Optionally, in the foregoing embodiments, after the obtaining, by a terminal, first information, the method further includes: the AS of the terminal sends fourth information to the NAS of the terminal. The fourth information includes the first information or a second indication, and the second indication indicates at least one of the following: 1) the NAS of the terminal is requested to perform security processing on the location information of the terminal; or 2) the terminal needs to send the location information of the terminal.

Optionally, that the AS of the terminal sends fourth information to the NAS of the terminal includes one of the following:
1) the AS of the terminal sends the fourth information to the NAS of the terminal when the first information is common for all networks, where the network includes at least one of the PLMN and the NPN; or
2) the AS of the terminal sends the first information corresponding to a first network when the first information is specific to each network, where the network includes at least one of the PLMN or the NPN, and the first network is a network selected by or registered with the terminal.

Optionally, in the foregoing embodiments, the reporting the location information of the terminal includes one of the following:
1) The AS of the terminal receives fifth information (which may be NAS information) sent by the NAS of the terminal, where the fifth information includes the location information of the terminal on which security processing has been performed by the NAS of the terminal, the security processing performed by the NAS includes at least one of ciphering or integrity verification, and the fifth information is carried via an RRC message and sent to a network side. It may be understood that, in this manner, the NAS obtains the location information of the terminal from an upper layer, performs the security processing, and delivers the location information to the AS. The AS sends the location information to a network side through an RRC message. The fifth information is essentially NAS information.
2) The terminal sends the fifth information (which may be RRC information), where the fifth information is carried via an RRC message, and the fifth information includes the location information of the terminal on which the security processing has been performed by the NAS of the terminal. It may be understood that, in this manner, the AS obtains the location information of the terminal from the upper layer and delivers the location information to the NAS for the security processing. The NAS delivers the location information of the terminal on which the security processing has been performed to the AS. The AS sends the location information on which the security processing has been performed by the NAS through the RRC message. The fifth information is essentially AS information (namely, an RRC IE).

In this embodiment, when the AS security is not used or the AS security is not activated, the NAS of the terminal performs the security processing on the location information of the terminal, thereby improving security of the location information of the terminal. Optionally, the RRC message is at least one of an RRCSetupComplete message, an RRC connection resume completion message, an RRC connection reestablishment completion message, an RRC connection reconfiguration completion message, an RRC setup request message, an RRC connection resume request message, an RRC connection reestablishment request message, or an RRC early data request (RRCEarlyDataRequest) message. It may be understood that in this embodiment, a new RRC message may be introduced to carry the fifth information.

Optionally, that the fifth information is carried via the RRC message includes at least one of the following: 1) the fifth information is encapsulated into a container, namely, an NAS container/a transparent container, and invisible or transparent to an RRC layer; 2) the fifth information is concatenated with the RRC message (the NAS message should normally be concatenated with the associated RRC message); or 3) the fifth information is loaded into the RRC message. It may be understood that, if the location information of the terminal is obtained by the NAS from an upper layer, that is, the fifth information is the NAS information, the fifth information is carried in the foregoing manner.

Optionally, in an embodiment, the method further includes: the NAS of the terminal obtains the location information of the terminal from the upper layer. For details, reference may be made to description of Embodiment 2 or Embodiment 3 below.

Optionally, in another embodiment, the method further includes: the AS of the terminal obtains the location information of the terminal from the upper layer; and the AS of the terminal sends sixth information to the NAS of the terminal. The sixth information includes the location information of the terminal. For details, reference may be made to description of Embodiment 4 below. The sixth information may include a third indication. The third indication indicates the NAS of the terminal to perform the security processing on the location information of the terminal.

The method for reporting location information according to this embodiment of this application is described above in detail with reference to FIG. 2. A method for reporting location information according to another embodiment of this application is described below in detail with reference to FIG. 3. It may be understood that interaction between an access network device and a terminal described on the access network device is the same as or corresponds to that described on the terminal side in the method shown in FIG. 2. To avoid repetition, relevant descriptions are properly omitted.

FIG. 3 is a schematic flowchart of implementation of a method for reporting location information according to an embodiment of this application. The method may be applied to an access network device. As shown in FIG. 3, the method 300 includes the following steps.

S302: An access network device sends first information, where the first information indicates a terminal to report location information of the terminal, and the reporting, by the terminal, the location information of the terminal includes: reporting the location information of the terminal when AS security of the terminal is not used or the AS security is not activated.

In this embodiment of this application, the access network device may indicate the terminal to report the location information of the terminal when the AS security is not used or the AS security is not activated, which is beneficial to assisting a network side in performing mobility management on the terminal, thereby improving performance of a communication system.

Optionally, as an embodiment, the method further includes: the access network device receives fifth information. The fifth information is carried via an RRC message, and the fifth information includes the location information of the terminal; and sending, by the access network device, the fifth information to a core network device. This embodiment is beneficial to assisting a network side in performing mobility management on a terminal, thereby improving performance of a communication system.

Optionally, as an embodiment, the method further includes: the access network device receives the location information of the terminal in a first process, where the first process includes at least one of an RRC setup procedure, an RRC connection resume procedure, an RRC connection reestablishment procedure, a handover procedure, or an early data transmission EDT procedure. In this embodiment, the network side may obtain the location information of the terminal as early as possible, which is beneficial to the network side for determining as early as possible whether a service being provided for the terminal is allowed.

Optionally, as an embodiment, UE location information (UE location information) sent by the access network device to the core network device does not include seventh information, where the seventh information includes all TACs broadcast in a cell under the coverage of the access network device, and the TACs correspond to a serving network of the terminal.

Optionally, as an embodiment, the method further includes: the access network device receives eighth information from the core network device, where the eighth information includes the location information of the terminal subjected to security processing by the core network device, and the security processing includes at least one of deciphering or integrity verification; the access network device determines information about an area where the terminal is located based on the location information of the terminal and a first mapping relationship; and the access network device sends the information about the area where the terminal is located to the core network device. It may be understood that, in this embodiment, the first mapping relationship is configured in the access network device, and the first mapping relationship may be configured through OAM.

Optionally, as an embodiment, the information about the area where the terminal is located includes at least one of the following: a mapped cell identifier, a TAC where the terminal is located, a TAI where the terminal is located, or a CGI where the terminal is located. The first mapping relationship includes at least one of the following: a mapping relationship between a cell identifier and a geographical area, a mapping relationship between the TAC and the geographical area, a mapping relationship between the TAI and the geographical area, or a mapping relationship between the CGI and the geographical area.

Optionally, as an embodiment, the method further includes: the access network device sends a fourth indication to the core network device. The fourth indication indicates the core network device to subject the fifth information to security processing.

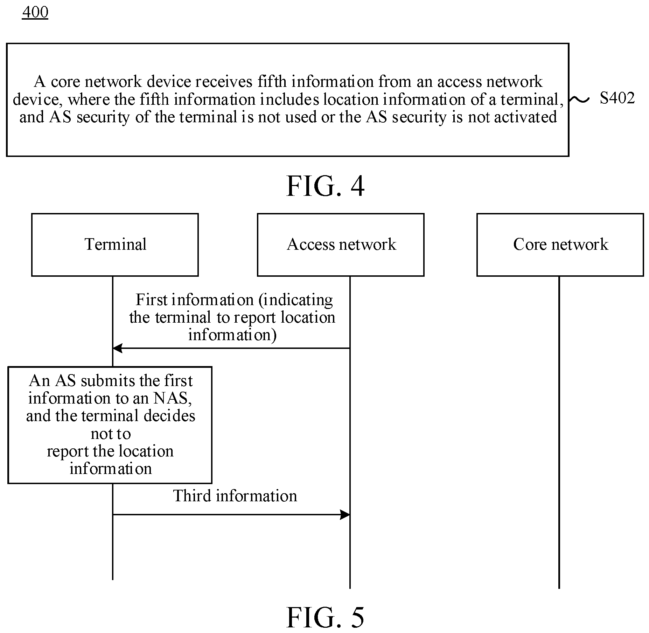

The method for reporting location information according to this embodiment of this application is described above in detail with reference to FIG. 2 and FIG. 3. A method for receiving location information according to another embodiment of this application is described below in detail with reference to FIG. 4. It may be understood that interaction between a core network device and an access network device described on the core network device is the same as or corresponds to that described on the access network device side in the method shown in FIG. 3. To avoid repetition, relevant descriptions are properly omitted.

FIG. 4 is a schematic flowchart of implementation of a method for receiving location information according to an embodiment of this application. The method may be applied to a core network device. As shown in FIG. 4, the method 400 includes the following steps.

S402: A core network device receives fifth information from an access network device, where the fifth information includes location information of a terminal, and AS security of the terminal is not used or the AS security is not activated.

In this embodiment of this application, when the AS security of the terminal is not used or the AS security is not activated, the terminal may further report location information, which is beneficial to assisting a network side in performing mobility management on the terminal, thereby improving performance of a communication system.

Optionally, as an embodiment, the method further includes: the core network device determines information about an area where the terminal is located based on the location information of the terminal and a second mapping relationship. It may be understood that, in this embodiment, the second mapping relationship is configured in the core network device, and the second mapping relationship may be configured by the OAM, or may be sent by the access network device to the core network device.

Optionally, as an embodiment, the information about the area where the terminal is located includes at least one of the following: a mapped cell identifier, a TAC where the terminal is located, a TAI where the terminal is located, or a CGI where the terminal is located. The second mapping relationship includes at least one of the following: a mapping relationship between a cell identifier and a geographical area, a mapping relationship between the TAC and the geographical area, a mapping relationship between the TAI and the geographical area, or a mapping relationship between the CGI and the geographical area.

Optionally, as an embodiment, the core network device ignores seventh information sent by the access network device, the seventh information includes all TACs broadcast in a cell under the coverage of the access network device, and the TACs correspond to a serving network of the terminal.

Optionally, as an embodiment, the method further includes: the core network device ignores ninth information sent by an access network device. The ninth information includes a single TAC broadcast in a cell under the coverage of the access network device.

Optionally, as an embodiment, the method further includes: the core network device sends eighth information to the access network device. The eighth information includes location information of the terminal subjected to security processing by the core network device. The core network device may further receive information about an area where the terminal is located, the information about the area is from the access network device, and the information about the area is determined by the access network device based on the location information of the terminal.

Optionally, in an embodiment, the method further includes: the core network device subjects the fifth information to security processing. The security processing includes at least one of deciphering or integrity verification.

Optionally, as an embodiment, the method further includes: the core network device receives a fourth indication from the access network device. The fourth indication indicates the core network device to subject the fifth information to security processing.

To describe the method for reporting location information provided in embodiments of this application in detail, a description is provided below in combination with several specific embodiments.

### Embodiment 1

In this embodiment, a network indicates a terminal to report location information, and the terminal does not report the location information. As shown in FIG. 5, in this embodiment, the following steps are included.

Step 1: The terminal obtains first information from a first cell, where the first information indicates the terminal to report location information.

The first information may include a first indication, and a meaning of the first indication includes one of the following: 1) a network requests a terminal to report location information; and 2) a network enables a terminal to report location information.

The first indication may be an explicit indication or an implicit indication. For example, if the first information includes any information related to location reporting (for example, first area information and/or service-related information), it may implicitly indicate that a network requests a terminal to report location information. If the first indication is the explicit indication, the first indication may be represented by using 1 bit (bit). Specifically, for example, if a value of the bit is 1 or true (true), it indicates that the network requests the terminal to report the location information; if the value of the bit is 0 or false (false), it indicates that the terminal does not need to report the location information. For another example, if the bit exists and has a value that is true, it indicates that the network requests the terminal to report the location information.

In addition, if the terminal needs to camp on or access the cell (that is, the cell sending the first information, which is the first cell in this embodiment), the terminal needs to report the location information.

In this embodiment, when the cell provides the first indication and the terminal has a first capability, the terminal may perform a first behavior. The first behavior includes at least one of the following: 1) the first cell is a suitable cell; 2) considering that the first cell is a candidate cell for cell selection or reselection; or 3) considering that the first cell is not barred. The first condition includes at least one of the following: 1) the terminal has a first capability; 2) the terminal decides to report the location information of the terminal; 3) the terminal does not wish to report the location information of the terminal; or 4) the location information of the terminal is available. This embodiment may be applicable to a case that a terminal reports location information.

In this embodiment, when the cell provides the first indication, and the terminal wishes to or decides to report the location information of the terminal, the terminal may perform the first behavior. The first behavior includes at least one of the following: 1) the first cell is a suitable cell; 2) considering that the first cell is a candidate cell for cell selection or reselection; or 3) considering that the first cell is not barred. The first condition includes at least one of the following: 1) the terminal has a first capability; 2) the terminal decides to report the location information of the terminal; 3) the terminal does not wish to report the location information of the terminal; or 4) the location information of the terminal is available. This embodiment may be applicable to a case that a terminal reports location information.

It may be understood that, the considering that the cell is a suitable cell further includes determining whether the cell is a suitable cell based on a determining condition (for example, the cell is not barred) of another suitable cell (suitable cell) in an existing mechanism. In addition, the foregoing two items may be combined. To be specific, when the cell provides the first indication, the terminal has the first capability, and the terminal wishes to and decides to report the location information of the terminal, the terminal performs the first behavior.

In this embodiment, when the cell provides the first indication and the terminal does not have a first capability, the terminal may perform a second behavior. The second behavior includes at least one of the following: 1) considering that the first cell is not a suitable cell; 2) considering that the first cell is not a candidate cell for cell selection or reselection; 3) considering that the first cell is barred, and additionally, considering that the cell is barred in a second time, for example, the first cell is barred in 300 s; or 4) considering that a limited service is available only on the first cell. This embodiment may be applicable to a case that a terminal does not report location information.

Similarly, it may be understood that the considering that a limited service is available only on the cell further includes determining whether the cell is an acceptable cell based on a determining condition of another acceptable cell (acceptable cell) in an existing mechanism.

In this embodiment, when the cell provides the first indication, and the terminal does not wish to report the location information/decides not to report the location information, the terminal performs a second behavior. The second behavior includes at least one of the following: 1) considering that the first cell is not a suitable cell; 2) considering that the first cell is not a candidate cell for cell selection or reselection; 3) considering that the first cell is barred, and additionally, considering that the cell is barred in a second time, for example, the first cell is barred in 300 s; or 4) considering that a limited service is available only on the first cell. This embodiment may be applicable to a case that a terminal does not report location information.

The first capability mentioned in the foregoing two embodiments may include at least one of the following: 1) a capability of reporting the location information of the terminal when the AS security is not used or the AS security is not activated; or 2) a capability of reporting the location information of the terminal in the first process. The first process includes at least one of an RRC setup procedure, an RRC connection resume procedure, an RRC connection reestablishment procedure, a handover procedure, or an EDT procedure.

The first capability is an optional capability that is not indicated for a network (Optional without signaling).

In addition, the first information further includes at least one of the following:
1) First area information, indicating an area where a terminal needs to report location information. Information about the area where the terminal is located includes at least one of the following: at least one TAI (Tracking area identifier, tracking area identifier) (including a PLMN ID and a TAC); at least one CGI (Cell Global Identifier, global cell identifier) (including a PLMN ID and a Cell ID); at least one piece of second information, where the second information includes carrier frequency information and at least one physical cell identifier (Physical Cell Identifier, PCI); at least one geographical location area, where for example, the one geographical location area may be identified through a reference point (indicated by a geographical coordinate) and a distance threshold, and for another example, the one geographical location area may be identified through a plurality of geographical coordinates; or at least one RAN area (identified through a RAN area ID) (including a TAC and a RAN area Code).
2) Service-related information, indicating under what service scenarios is it required to report location information by a terminal, and including at least one of the following: an emergency service (emergency), a high-priority access service (highPriorityAccess, related to AC 11.15), a mobile terminating-access service (Mobile Terminating-Access, mt-Access), a mobile originating-signalling service (Mobile Originating-Signalling, mo-Signalling), a mobile originating-data service (mo-Data), a delay-tolerant access service (delayTolerantAccess-v1020), a voice call service (mo-VoiceCall-v1280), a delay-sensitive service, a conversational service, a streaming service, an interactive service, or a background service.

In addition, a terminal needs to perform a first behavior or a second behavior only when the terminal does not report location information according to a request of a network side in a first area, and the first area may be specified by a protocol or configured on the network side (for example, indicated in first information). The terminal needs to perform the first behavior or the second behavior only when a type of the service initiated by the terminal is a specific service type, and the specific service type may be specified by the protocol or configured on the network side (for example, indicated in the first information).

The reporting location information further includes at least one of the following: 1) reporting the location information when the AS security is not activated or the AS security is not used; or 2) reporting the location information in a first process, where the first process includes at least one of an RRC setup procedure, an RRC connection resume procedure, an RRC connection reestablishment procedure, a handover procedure, or an early data transmission (Early Data Transmission, EDT) procedure. In this embodiment, the network side may obtain the location information of the terminal as early as possible, which is beneficial to the network side for determining as early as possible whether a service being provided for the terminal is allowed.

The location information includes at least one of the following: 1) rough location information, for example, coarseLocationInfo, encoded by an Ellipsoid-Point IE; or 2) precise/detailed location information, for example, LocationInfo.

The first information may be provided through a system information broadcast (for a specific signaling format, refer to Embodiment 5), or a paging message, or dedicated signaling.

Step 2: The AS of the terminal delivers the first information to an NAS.

In addition, if the first information is common for all PLMNs and NPNs, the terminal delivers the first information. If the first information is specific per PLMN or SNPN, the terminal delivers the first information in PLMN-IdentityInfo/NPN-IdentityInfo that includes a selected PLMN/SNPN to the NAS.

Step 3: If the terminal does not report the location information, the terminal may send third information to a network, where the third information indicates at least one of the following: 1) the terminal does not wish to report the location information of the terminal; 2) the terminal decides not to report the location information of the terminal; or 3) the location information of the terminal is not available (UE location is not available).

In addition, the third information may further include information about a second time. The information about the second time indicates a time when the terminal does not wish to report the location information of the terminal, or indicating a time when the terminal decides not to report the location information of the terminal, or indicating a time when the location information of the terminal is not available. The time may be a time stamp (a specific time), a time interval, or the like.

In addition, the second information may further include second area information. The second area information indicates an area where the terminal does not wish to report the location information of the terminal, or an area where the terminal decides not to report the location information of the terminal, or an area where the location information of the terminal is not available.

The third information may be reported in Msg3 or Msg5. The third information may be RRC information, or a new MAC CE may be introduced to include the third information. It may be understood that content of the third information may be null. To be specific, the third information does not include the information about the second time and the second area information. The MAC CE is identified through a MAC PDU subheader with an LCID/ELCD, and has a fixed size of zero bits (It has a fixed size of zero bits).

It may be understood that, if a network configures/requests/enables a terminal to report location information, the terminal may not report the location information, and may still perform an existing process, for example, may camp on the cell to perform an RRC setup procedure, uplink and downlink transmission, and the like. In addition, even if the terminal indicates not wishing to report the location information, the network may still request the terminal to report again.

In addition, if the terminal does not report the location information, the method further includes: the NAS of the terminal indicates the third information to the AS of the terminal.

It may be understood that an entity determining not to report the location information may be the AS, or the NAS. If the AS decides not to report the location information, the AS generates the third information and sends the third information to the network. If the NAS decides not to report the location information, the NAS generates the third information and indicates the third information to the AS, and the AS sends the third information to the network.

In addition, the terminal needs to send the third information only when the terminal does not report the location information according to a request of a network side in a first area, and the first area may be specified by a protocol or configured on the network side (for example, indicated in first area information in the first information). The terminal needs to send the third information only when a type of the service initiated by the terminal is a specific service type. The specific service type may be specified by the protocol or configured on the network side (for example, indicated in service-related information in the first information).

Optionally, the terminal mentioned in this embodiment is an NB-IoT terminal that supports only CP CIoT EPS/5GS Optimization.

### Embodiment 2

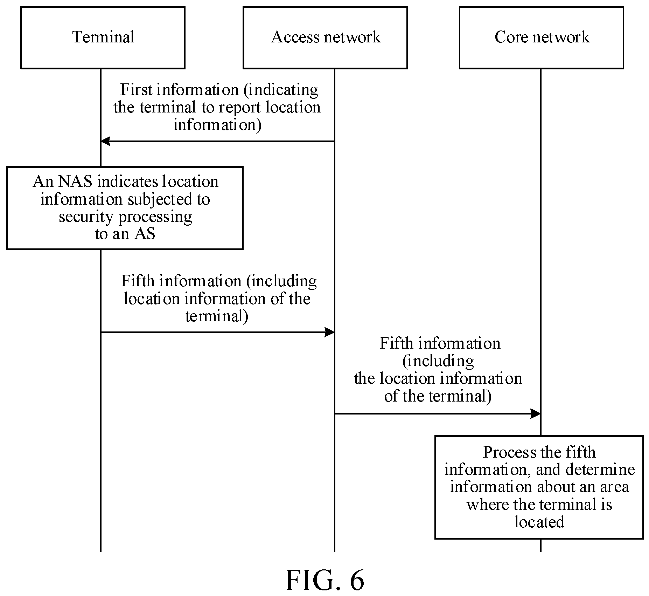

In this embodiment, a terminal reports location information. An NAS performs security processing on the location information of the terminal, and provides the location information to an AS. A core network decodes the location information, and the core network determines a TAC where the terminal is located. As shown in FIG. 6, this embodiment includes the following steps.

Step 1: The terminal obtains first information, where the first information indicates the terminal to report location information. For content of the step, reference may be made to step 1 in Embodiment 1. Details are not described herein again.

Step 2: An NAS of the terminal performs security processing on the location information of the terminal, and indicates fifth information to an AS, where the fifth information includes location information obtained after the security processing, and the security processing includes at least one of ciphering or integrity verification.

In addition, the NAS obtains the location information of the terminal from an upper layer (for example, an APP layer).

It may be understood that the NAS layer generates NAS information including location information and performs security processing.

Before this step, sending, by the AS, fourth information to the NAS is further included. The fourth information includes first information or a second indication, and the meaning of the second indication includes at least one of the following: 1) the NAS of the terminal is requested to perform security processing on the location information of the terminal; or 2) the terminal needs to send the location information of the terminal.

It may be understood that the AS layer may determine to send the location information, and send information to indicate the NAS to process the location information; or the AS may only deliver the received first information, and the NAS decides to send the location information.

Step 3: The terminal sends fifth information to a network, where the fifth information is carried via an RRC message, and the fifth information includes location information of the terminal on which security processing has been performed by the NAS of the terminal. In this embodiment, when the AS security is not used or the AS security is not activated, the NAS of the terminal performs the security processing on the location information of the terminal, thereby improving security of the location information of the terminal.

Optionally, the RRC message is at least one of an RRCSetupComplete message, an RRC connection resume completion message, an RRC connection reestablishment completion message, an RRC connection reconfiguration completion message, an RRC setup request message, an RRC connection resume request message, an RRC connection reestablishment request message, or an RRC early data request (RRCEarlyDataRequest) message. It may be understood that in this embodiment, a new RRC message may be introduced to carry the fifth information.

That the fifth information is carried via the RRC message includes at least one of the following:
1) the fifth information is encapsulated into a container;
2) the fifth information is concatenated (concatenated) with the RRC message; or
3) the fifth information is loaded (piggybacked) to the RRC message.

Step 4: An access network receives the fifth information and sends the fifth information to a core network.

In addition, UE location information sent by the access network device to the core network device does not include seventh information, where the fifth information includes the location information of the terminal. The seventh information includes all TACs broadcast in a cell under the coverage of the access network device, and the TACs correspond to a serving network of the terminal. For example, the access network does not need to provide TAC List in LTE NTN (see the table below) in LTE NTN TAI Information to the core network.

If the access network provides the LTE NTN TAI Information to the core network, the core network ignores the TAC List in LTE NTN (see the table below).

In addition, if the access network provides a TAI (see the table below) and does not provide the LTE NTN TAI Information, the core network ignores the TAI.

| **IE/Group Name** | **Presence** | **Range** | **IE Type and Reference** | **Semantics Description** | **Criticality** | **Assigned Criticality** |
|---|---|---|---|---|---|---|
| **UE location information** | | | | | - | - |
| >E-UTRAN CGI | M | | 9.2.1.38 | | - | - |
| >TAI | M | | 9.2.3.16 | In NTN, this IE indicates the single broadcast TAC. This IE shall be ignored if the *LTE NTN TAI Information* IE is present. | - | - |
| >PSCell Information | O | | 9.2.1.141 | | YES | ignore |
| >LTE NTN TAI Information | O | | 9.2.3.56 | | YES | ignore |

| **IE/Group Name** | **Presence** | **Range** | **IE type and reference** | **Semantics description** |
|---|---|---|---|---|
| Serving PLMN | M | | PLMN Identity 9.2.3.8 | Indicates the UE's serving PLMN. |
| **TAC List in LTE NTN** | | *1.. <maxnoofTACsinNTN>* | | Includes all TAC(s) broadcast in the cell, for the UE's serving PLMN. |
| >TAC | M | | 9.2.3.7 | |
| UE location derived TAC in LTE NTN | O | | TAC 9.2.3.7 | This IE contains TAC information derived from the actual UE location, if available. |

Step 5: The core network obtains information about an area where the terminal is located based on the fifth information and a second mapping relationship. The second mapping relationship is configured in the core network, and the information about the area of the terminal includes: a mapped cell identifier (Mapped Cell ID), that is, a Cell ID corresponding to a fixed ground area, a TAC where the terminal is located, a TAI where the terminal is located, and a CGI where the terminal is located.

The second mapping relationship includes at least one of the following: a mapping relationship between a cell identifier and a geographical area, a mapping relationship between the TAC and the geographical area, a mapping relationship between the TAI and the geographical area, or a mapping relationship between the CGI and the geographical area.

The second mapping relationship may be pre-configured (for example, depending on a policy of an operator), or may be configured based on implementation.

Before the step, subjecting the fifth information to security processing by the core network is further included. The security processing includes at least one of deciphering or integrity verification.

### Embodiment 3

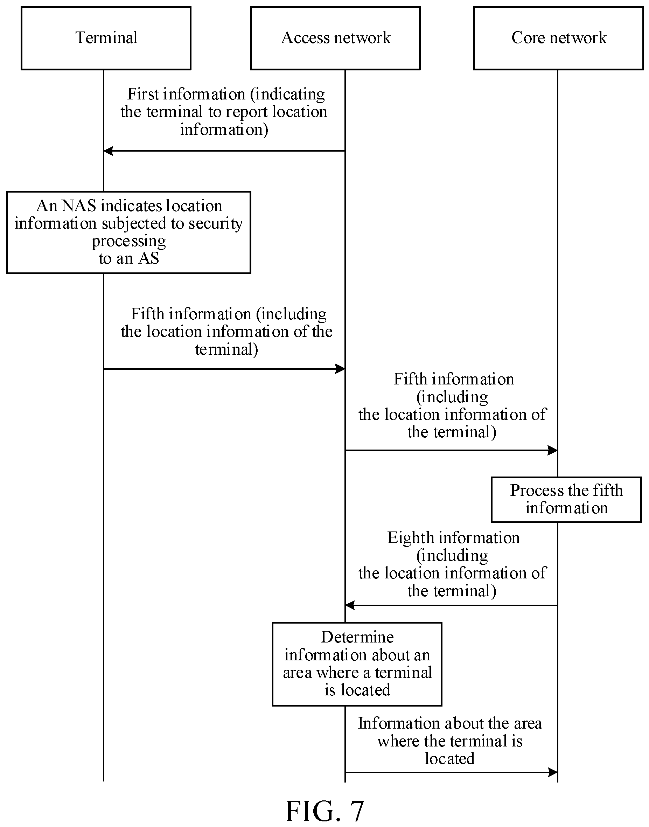

In this embodiment, a terminal reports location information. An NAS of the terminal performs security processing on the location information of the terminal, and provides the location information to an AS. The core network decodes the location information and indicates the location information to an RAN, and the access network determines a TAC where the terminal is located. As shown in FIG. 7, this embodiment includes the following steps.

For step 1 to step 4, reference may be made to step 1 to step 4 in Embodiment 2.

Step 5: The core network sends eighth information to the access network, where the eighth information includes the location information of the terminal.

Before the step, subjecting the fifth information to security processing by the core network is further included. The security processing includes at least one of deciphering or integrity verification.

It may be understood that, after obtaining the location information of the terminal, the core network regenerates the eighth information (including the location information of the terminal) to be sent to the access network through an S1 or NG interface.

Step 6: The access network determines information about an area where the terminal is located based on the location information of the terminal and a first mapping relationship. The first mapping relationship is configured in the access network.

Step 7: The access network sends the obtained information about the area where the terminal is located to the core network, for example, through a UE location information IE.

It may be understood that in an existing mechanism, the access network sends a UE location information IE to the core network in some procedures triggered by the core network, for example, E-RAB Management procedures, specifically, for example, including the IE in an E-RAB SETUP RESPONSE message, an E-RAB MODIFY RESPONSE message, an E-RAB RELEASE RESPONSE message, an E-RAB MODIFICATION INDICATION message, a UE CONTEXT RELEASE COMPLETE message, a UE CONTEXT SUSPEND REQUEST message, or the like.

In this embodiment, in addition to that the access network may be triggered to send the UE location information IE to the core network in these procedures, sending, by the core network, the location information of the terminal to the access network is further included, so as to trigger the access network to send the IE to the core network. In addition, a new S1AP message/NGAP message may be introduced to carry the UE location information IE.

### Embodiment 4

In this embodiment, an RRC generates an RRC IE related to location information, and delivers the RRC IE to an NAS for security processing. The NAS feeds back the RRC IE on which the security processing has been performed to an AS. After receiving the location information, the access network sends the location information to the core network. The core network performs security processing and then feeds back the location information to the access network. The access network determines a TAC where the terminal is located.

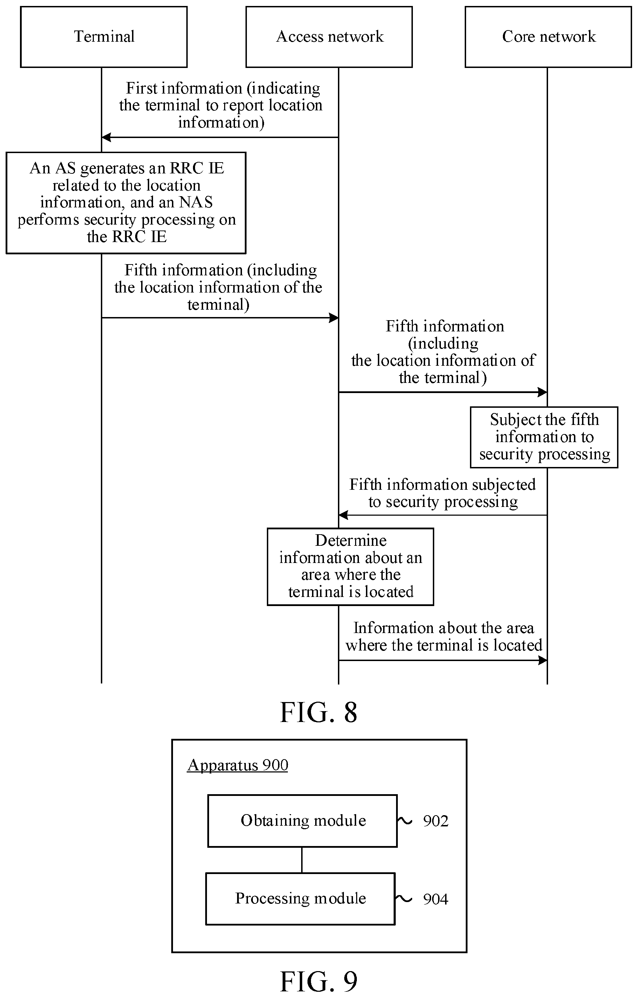

A difference between this embodiment and Embodiment 2 and Embodiment 3 lies in that, the location information in Embodiment 2 and Embodiment 3 is essentially NAS information (generated and subjected to security processing by the NAS). The location information in this embodiment is generated by the AS, namely, the RRC IE, and is subjected to security processing by the NAS layer. As shown in FIG. 8, this embodiment includes the following steps.

Step 1: The terminal obtains first information, where the first information indicates the terminal to report location information. For content of the step, reference may be made to step 1 in Embodiment 1. Details are not described herein again.

Step 2: An AS of the terminal sends sixth information to an NAS of the terminal, where the sixth information includes the location information of the terminal.

In addition, the AS layer obtains the location information of the terminal from an upper layer (for example, the APP layer).

It may be understood that the sixth information may be the RRC IE.

In addition, the sixth information may further include a third indication, which indicates the NAS to perform security processing on the location information of the terminal. It may be understood that, if no third indication exists, the AS only indicates the location information of the terminal, or may implicitly indicate that the NAS needs to perform security processing on the location information.

Step 3: The NAS of the terminal performs security processing on the location information of the terminal, and sends processed fifth information to the AS.

Step 4: The terminal sends fifth information to a network, where the fifth information is carried via an RRC message, and the RRC message is at least one of an RRCSetupComplete message, an RRC connection resume completion message, an RRC connection reestablishment completion message, an RRC connection reconfiguration completion message, an RRC setup request message, an RRC connection resume request message, an RRC connection reestablishment request message, or an RRC early data request (RRCEarlyDataRequest) message. It may be understood that in this embodiment, a new RRC message may be introduced to carry the fifth information.

Step 5: The access network receives the fifth information, and sends the fifth information to a core network. In addition, a fourth indication is sent to the core network, to indicate the core network to subject the fifth information to security processing.

Step 6: The core network sends the fifth information subjected to security processing to the access network.

Step 7: The access network determines information about an area where the terminal is located based on the fifth information subjected to security processing and a first mapping relationship, where the first mapping relationship is configured in the access network.

Step 8: The access network sends the obtained information about the area where the terminal is located to the core network, for example, through a UE location information IE.

It may be understood that the core network sends the location information of the terminal to the access network, so as to trigger the access network to send the IE to the core network.

### Embodiment 5

This embodiment mainly introduces a signaling format in which first information is provided in a broadcast manner.

If broadcast through system information, the first information may be provided in system information used for including information related to evaluating whether a UE is allowed to access a cell and including scheduling of another system information, for example, provided in SIB1 (system information in NR)/SystemInformationBlockType1 (system information in LTE)/SystemInformationBlockType1-MBMS (system information in LTE)/SystemInformationBlockType1-BR; and may also be provided in system information including assistance information used for NTN access, for example, SIB19 (system information in NR)/SystemInformationBlockType31/SystemInformationBlockType31-NB (system information in LTE).

If provision in SIB1 (system information in NR)/SystemInformationBlockType1/SystemInformationBlockType1-MBMS (system information in LTE), an example in which the first information includes a first indication is used, and the following several manners exist:
1) A field is extended in the SIB1 to include the first information. The field is included in the SIB1 and is parallel to another outermost field (for example, cellAccessRelatedInfo). An example in which the first information includes only the first indication is used, and a specific signaling format is illustrated as follows: 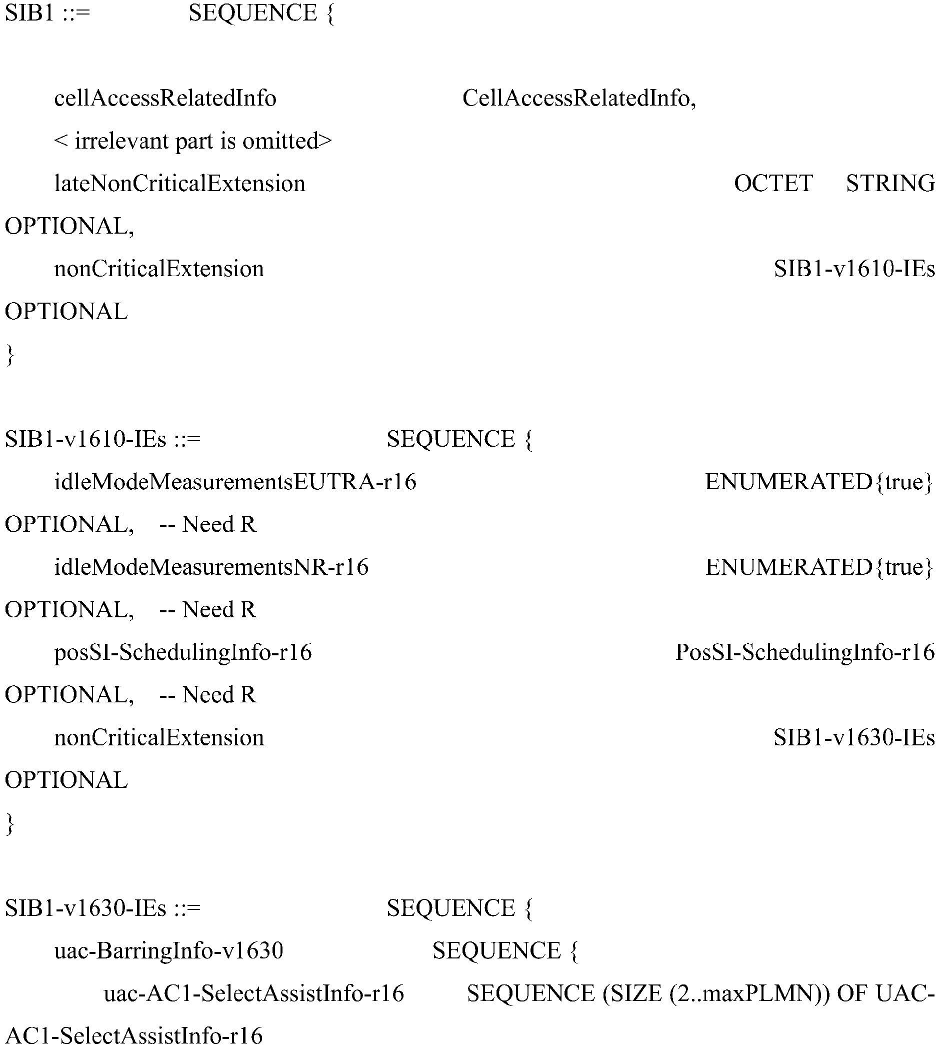 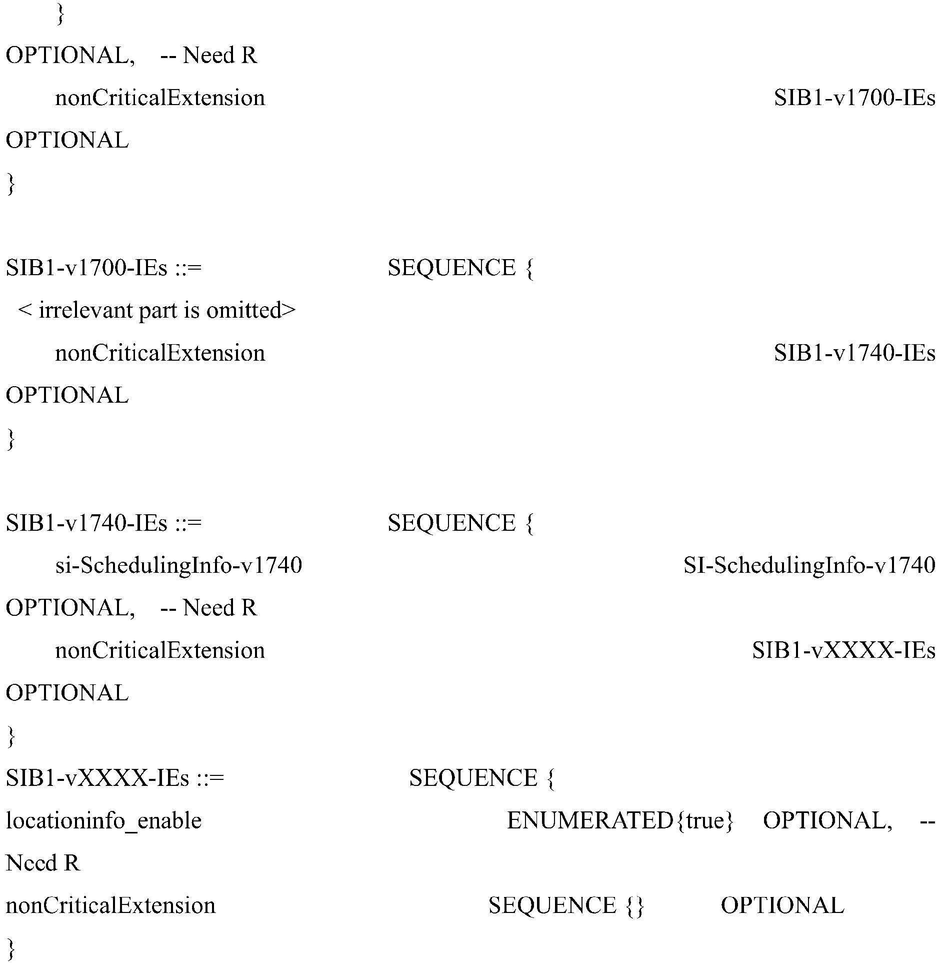
2) The field is placed in cellAccessRelatedInfo, and the field is common for all PLMNs and NPNs (this field is common for all PLMNs and NPNs). An example in which the first information includes only the first indication is used, and a specific signaling structure is shown as follows: 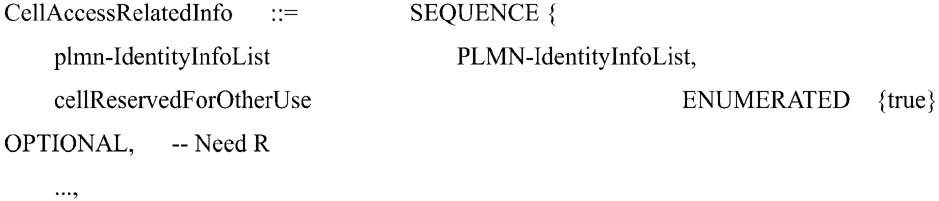 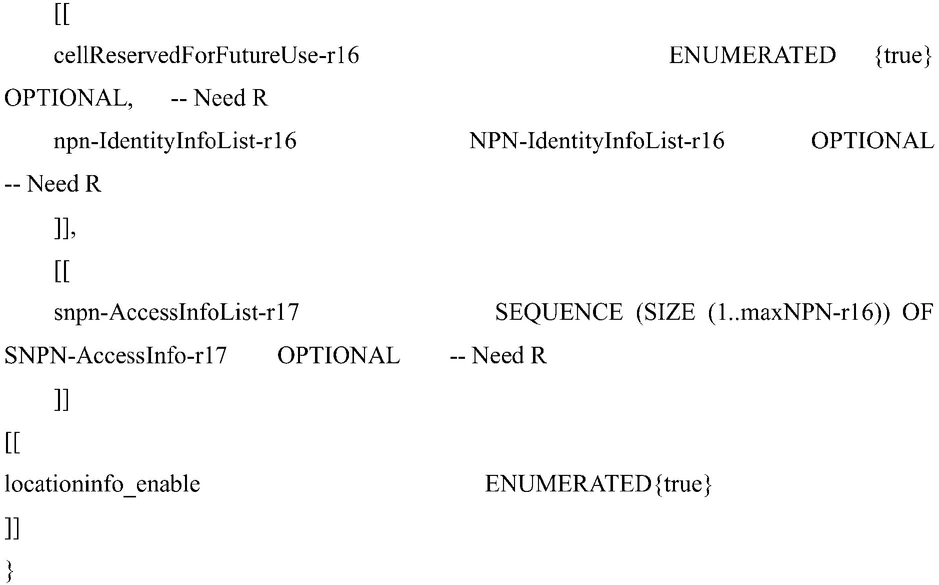
3) The field is placed in cellAccessRelatedInfo, and the field is specified per PLMN or per SNPN (this field is specified per PLMN or per SNPN), that is, in plmn-IdentityInfo or in npn-IdentityInfoList. An example in which the field is specified per PLMN and the first information includes only the first indication is used, and a specific signaling structure is shown as follows:

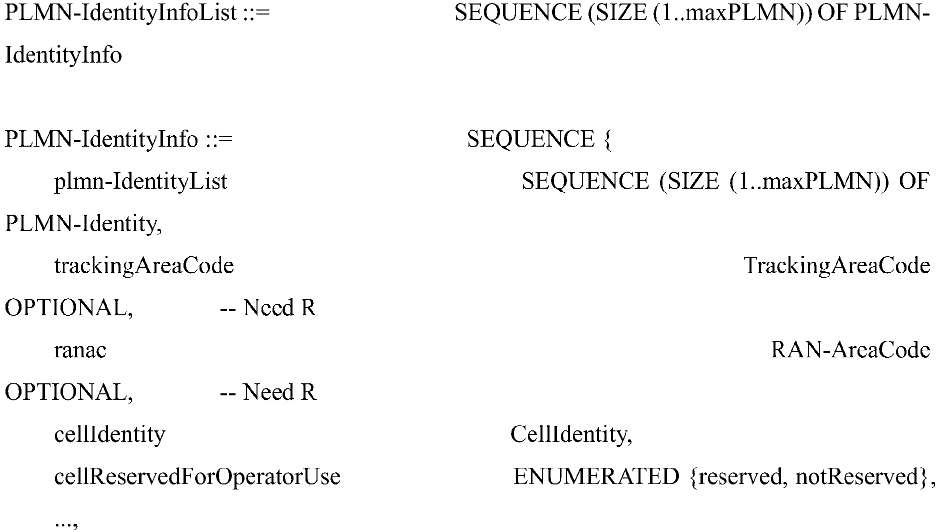

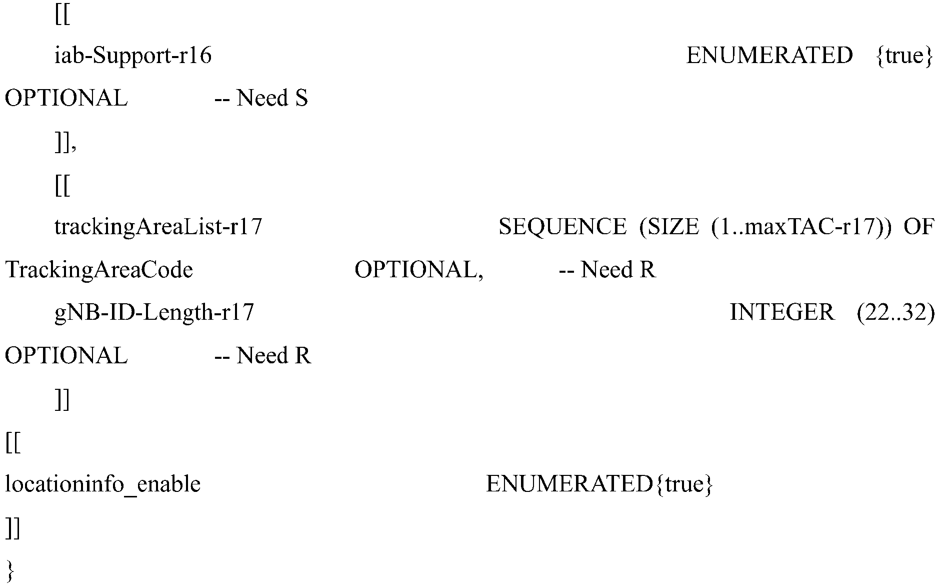

Provision in SystemInformationBlockTypel/SystemInformationBlockTypel-MBMS is similar, and details are not described again.

If provision in SIB19/SystemInformationBlockType31/SystemInformationBlockType31-NB, the SIB19 is used as an example.
1) At an outermost layer of the SIB19 and in parallel with a satellite-related parameter (ntn-config of a serving cell) required for accessing the serving cell, an example in which the first information includes only the first indication is used, and a specific signaling structure is shown as follows:

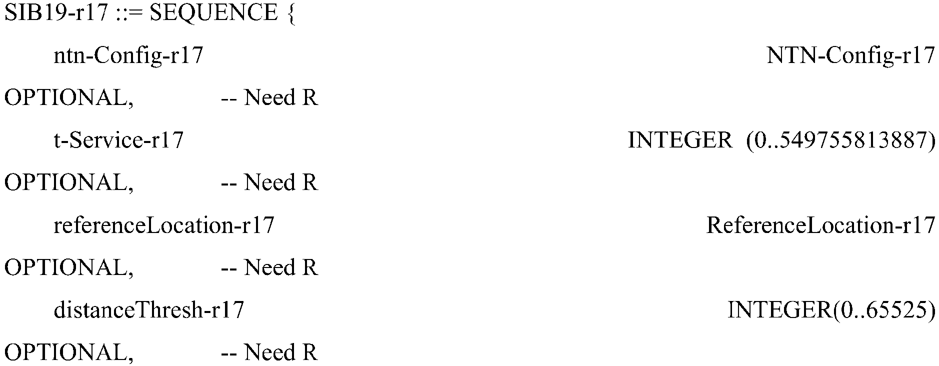

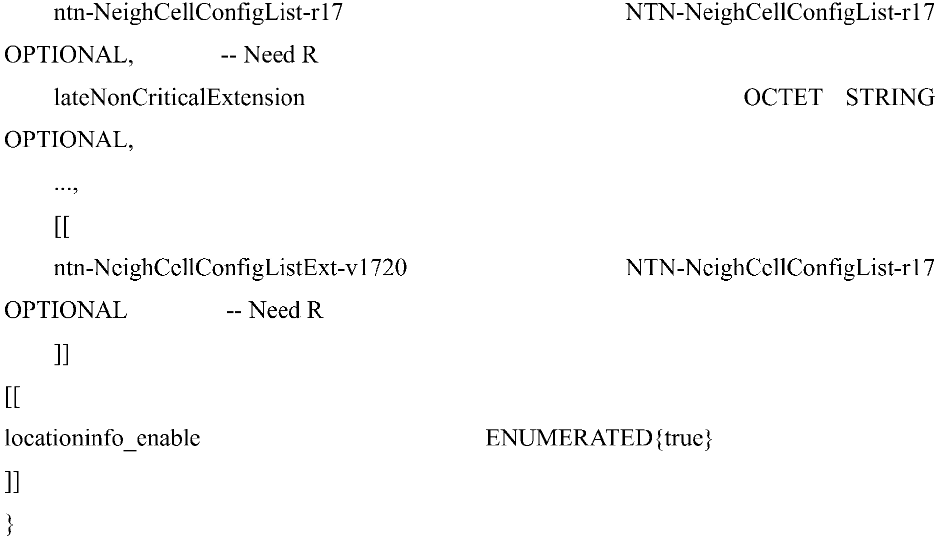

For the SystemInformationBlockType31, an example in which the first information includes only the first indication is used, and specific signaling is as follows:

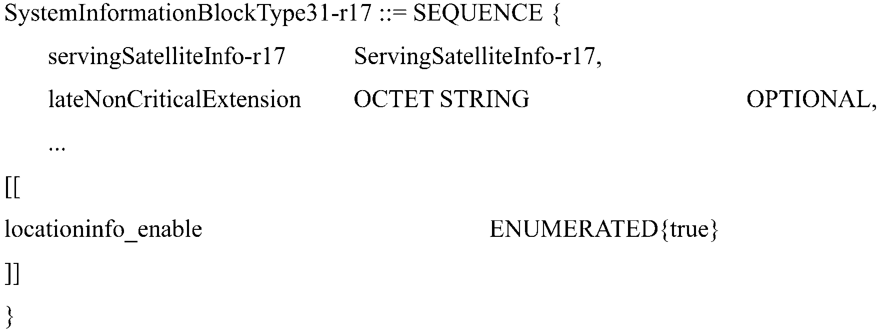

2) In the ntn-config/servingSatelliteInfo, additionally, it is defined that the field exists only for the serving cell.

An execution body of the method for reporting location information provided in embodiments of this application may be an apparatus for reporting location information. In embodiments of this application, an example in which the apparatus for reporting location information performs the method for reporting location information is used to describe the apparatus for reporting location information provided in embodiments of this application.

FIG. 9 is a schematic structural diagram of an apparatus for reporting location information according to an embodiment of this application. The apparatus may be applied to a terminal. As shown in FIG. 9, the apparatus 900 includes the following modules:
an obtaining module 902, configured to obtain first information, where the first information indicates the terminal to report location information of the terminal, and
a processing module 904, configured to perform any one of the following based on the first information: skipping reporting the location information of the terminal; or reporting the location information of the terminal, where access stratum AS security of the terminal is not used or the AS security is not activated.

In embodiments of this application, when the AS security of the terminal is not used or the AS security is not activated, if a network indicates the terminal to report the location information, the terminal may not report the location information, which is beneficial to protecting privacy of the terminal. The terminal may further report the location information, which is beneficial to assisting a network side in performing mobility management on the terminal, thereby improving performance of a communication system.

Optionally, the processing module 904 is configured to report the location information of the terminal in a first process, where the first process includes at least one of a radio resource control RRC setup procedure, an RRC connection resume procedure, an RRC connection reestablishment procedure, a handover procedure, or an early data transmission EDT procedure.

Optionally, the location information of the terminal includes at least one of the following: rough location information; or precise location information.

Optionally, the first information includes a first indication, and the first indication indicates one of the following: a network requests the terminal to report the location information; or a network enables the terminal to report the location information.

Optionally, the first information may further include at least one of the following: 1) first area information, where the first area information indicates an area in which the terminal needs to report the location information of the terminal; or 2) service-related information, where the service-related information indicates under what service scenarios is it required to report the location information by the terminal.

Optionally, the first area information includes at least one of the following: at least one tracking area identifier TAI; at least one cell global identifier CGI; at least one piece of second information; at least one geographical location area; or at least one radio access network RAN area. The second information includes carrier frequency information and at least one physical cell identifier PCI.

Optionally, the service-related information indicates at least one of the following: an emergency service, a high-priority access service, a mobile terminating-access service, a mobile originating-signalling service, a mobile originating-data service, a delay-tolerant access service, a voice call service, a delay-sensitive service, a conversational service, a streaming service, an interactive service, or a background service.

Optionally, the first information is carried via system information, a paging message, or dedicated signaling.

Optionally, that the first information is carried via the system information includes: the first information is carried via a system information block 1 (SIB1) or through a first system information block. The first system information block includes satellite assistance information.

Optionally, that the first information is carried via the SIB1 includes: the first information is carried via a first field in the SIB1 and one of the following is satisfied: 1) the first field is parallel to a second field in the SIB1; 2) the first field is included in the second field, and the first field is common for all networks, that is, associated with all networks, and the network includes at least one of a public or mobile network (PLMN) and a non-public network (NPN); or 3) the first field is included in the second field, the first field is dedicated to each network, and the network includes at least one of the PLMN or the NPN. The second field indicates cell access-related information.

Optionally, that the first information is carried via the first system information block includes: the first information is carried via a third field in the first system information block and one of the following is satisfied: 1) the third field is parallel to a fourth field; or 2) the third field is included in the fourth field. The fourth field indicates a satellite-related parameter required for accessing a serving cell.

Optionally, the processing module 904 is further configured to perform at least one of the following when the terminal obtains the first information from a first cell and a first condition is satisfied: 1) considering that the first cell is a suitable cell; 2) considering that the first cell is a candidate cell for cell selection or reselection; or 3) considering that the first cell is not barred. The first condition includes at least one of the following: 1) the terminal has a first capability; 2) the terminal decides to report the location information of the terminal; 3) the terminal does not wish to report the location information of the terminal; or 4) the location information of the terminal is available.

Optionally, the processing module 904 is further configured to perform at least one of the following when the terminal obtains the first information from the first cell and a second condition is satisfied: 1) considering that the first cell is not a suitable cell; 2) considering that the first cell is not a candidate cell for cell selection or reselection; 3) considering that the first cell is barred; 4) considering that the first cell is barred within a first time; or 5) considering that a limited service is available only on the first cell. The second condition includes at least one of the following: 1) the terminal does not have a first capability; 2) the terminal decides not to report the location information of the terminal; 3) the terminal does not wish to report the location information of the terminal; or 4) the location information of the terminal is not available.

Optionally, the first capability mentioned in the foregoing two embodiments includes at least one of the following: 1) a capability of reporting the location information of the terminal when the AS security is not used or the AS security is not activated; or 2) a capability of reporting the location information of the terminal in the first process. The first process includes at least one of an RRC setup procedure, an RRC connection resume procedure, an RRC connection reestablishment procedure, a handover procedure, or an EDT procedure.

Optionally, when the location information of the terminal is not reported, the processing module 904 is further configured to send third information. The third information indicates at least one of the following: 1) the terminal does not wish to report the location information of the terminal; 2) the terminal decides not to report the location information of the terminal; or 3) the location information of the terminal is not available.

Optionally, the third information further includes at least one of the following:
1) Information about a second time. The information about the second time indicates a time when the terminal does not wish to report the location information of the terminal, or a time when the terminal decides not to report the location information of the terminal, or a time when the location information of the terminal is not available.
2) Second area information. The second area information indicates an area where the terminal does not wish to report the location information of the terminal, or an area where the terminal decides not to report the location information of the terminal, or an area where the location information of the terminal is not available.

Optionally, an NAS of the terminal is further configured to indicate the third information to an AS of the terminal.

Optionally, in the foregoing embodiments, after the obtaining, by a terminal, first information, the AS of the terminal is further configured to send fourth information to the NAS of the terminal. The fourth information includes the first information or a second indication, and the second indication indicates at least one of the following: 1) the NAS of the terminal is requested to perform security processing on the location information of the terminal; or 2) the terminal needs to send the location information of the terminal.

Optionally, the sending, by the AS of the terminal, the fourth information to the NAS of the terminal includes one of the following:
1) When the first information is common for all networks, the AS of the terminal sends the fourth information to the NAS of the terminal. The network includes at least one of a PLMN or an NPN.
2) When the first information is specific to each network, the AS of the terminal sends the first information corresponding to a first network. The network includes at least one of the PLMN or the NPN, and the first network is a network selected by the terminal or registered by the terminal.

Optionally, in the foregoing embodiments, the reporting the location information of the terminal includes: receiving, by the AS of the terminal, fifth information sent by the NAS of the terminal, where the fifth information includes the location information of the terminal on which the security processing has been performed by the NAS of the terminal and the security processing performed by the NAS includes at least one of ciphering or integrity verification; and sending, by the terminal, the fifth information, where the fifth information is carried via an RRC message, and the fifth information includes the location information of the terminal on which the security processing has been performed by the NAS of the terminal.

Optionally, the NAS of the terminal is further configured to obtain the location information of the terminal from an upper layer.

Optionally, the AS of the terminal is further configured to obtain the location information of the terminal from the upper layer, and the AS of the terminal sends sixth information to the NAS of the terminal, where the sixth information includes the location information of the terminal.

Optionally, the sixth information further includes a third indication. The third indication indicates the NAS of the terminal to perform security processing on the location information of the terminal.

Optionally, that the fifth information is carried via the RRC message includes at least one of the following: 1) the fifth information is encapsulated into a container; 2) the fifth information is concatenated with the RRC message; or 3) the fifth information is loaded into the RRC message.

Optionally, the RRC message is at least one of an RRCSetupComplete message, an RRC connection resume completion message, an RRC connection reestablishment completion message, an RRC connection reconfiguration completion message, an RRC setup request message, an RRC connection resume request message, an RRC connection reestablishment request message, or an RRC early data request message.

For the apparatus 900 according to this embodiment of this application, reference may be made to the process of the corresponding method 200 in embodiments of this application. In addition, the units/modules of the apparatus 900 and the foregoing other operations and/or functions are respectively intended to implement the corresponding process of the method 200, and can achieve the same or equivalent technical effect. For brevity, details are not described herein again.

The apparatus for reporting location information in embodiments of this application may be an electronic device, for example, an electronic device with an operating system; or may be a component in the electronic device, for example, an integrated circuit or a chip. The electronic device may be a terminal, or may be another device other than a terminal. For example, the terminal may include, but is not limited to, the foregoing listed types of the terminal 11. The another device may be a server, a network attached storage (Network Attached Storage, NAS), or the like, which is not specifically limited in embodiments of this application.

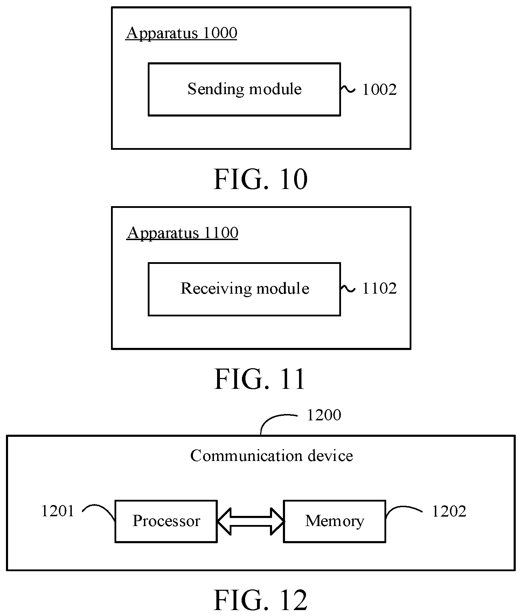

FIG. 10 is a schematic structural diagram of an apparatus for reporting location information according to an embodiment of this application. The apparatus may be applied to an access network device. As shown in FIG. 10, the apparatus 1000 includes the following modules:
a sending module 1002, configured to send first information, where the first information indicates a terminal to report location information of the terminal, and the reporting, by the terminal, the location information of the terminal includes: reporting the location information of the terminal when AS security of the terminal is not used or the AS security is not activated.

In this embodiment of this application, the access network device may indicate the terminal to report the location information when the AS security is not used or the AS security is not activated, which is beneficial to assisting a network side in performing mobility management on the terminal, thereby improving performance of a communication system.

Optionally, as an embodiment, the apparatus 1000 further includes a receiving module, configured to receive fifth information. The fifth information is carried via an RRC message, and the fifth information includes the location information of the terminal. The access network device sends the fifth information to a core network device.

Optionally, as an embodiment, the apparatus 1000 further includes a receiving module, configured to receive the location information of the terminal in a first process, where the first process includes at least one of an RRC setup procedure, an RRC connection resume procedure, an RRC connection reestablishment procedure, a handover procedure, or an early data transmission EDT procedure.

Optionally, as an embodiment, UE location information sent by the access network device to the core network device does not include seventh information, where the seventh information includes all TACs broadcast in a cell under the coverage of the access network device, and the TACs correspond to a serving network of the terminal.

Optionally, as an embodiment, the apparatus 1000 further includes a receiving module, configured to receive eighth information from the core network device, where the eighth information includes location information of the terminal subjected to security processing by the core network device, and the security processing includes at least one of deciphering or integrity verification; and configured to determine information about an area where the terminal is located based on the location information of the terminal and a first mapping relationship; and a sending module 1002, configured to send, to the core network device, the information about the area where the terminal is located.

Optionally, as an embodiment, the information about the area where the terminal is located includes at least one of the following: a mapped cell identifier, a TAC where the terminal is located, a TAI where the terminal is located, or a CGI where the terminal is located. The first mapping relationship includes at least one of the following: a mapping relationship between a cell identifier and a geographical area, a mapping relationship between the TAC and the geographical area, a mapping relationship between the TAI and the geographical area, or a mapping relationship between the CGI and the geographical area.

Optionally, as an embodiment, the sending module 1002 is configured to send a fourth indication to the core network device, and the fourth indication indicates the core network device to subject the fifth information to security processing.

For the apparatus 1000 according to this embodiment of this application, reference may be made to the process of the corresponding method 300 in embodiments of this application. In addition, the units/modules of the apparatus 1000 and the foregoing other operations and/or functions are respectively intended to implement the corresponding process of the method 300, and can achieve the same or equivalent technical effect. For brevity, details are not described herein again.

FIG. 11 is a schematic structural diagram of an apparatus for receiving location information according to an embodiment of this application. The apparatus may be applied to a core network device. As shown in FIG. 11, the apparatus 1100 includes the following modules.

A receiving module 1102 is configured to receive fifth information from an access network device, where the fifth information includes location information of a terminal, and AS security of the terminal is not used or the AS security is not activated.

In this embodiment of this application, when the AS security of the terminal is not used or the AS security is not activated, the terminal may further report the location information, which is beneficial to assisting a network side in performing mobility management on the terminal, thereby improving performance of a communication system.

Optionally, as an embodiment, the receiving module 1102 is further configured to determine, based on the location information of the terminal and a second mapping relationship, information about an area where a terminal is located.

Optionally, as an embodiment, the information about the area where the terminal is located includes at least one of the following: a mapped cell identifier, a TAC where the terminal is located, a TAI where the terminal is located, or a CGI where the terminal is located. The second mapping relationship includes at least one of the following: a mapping relationship between a cell identifier and a geographical area, a mapping relationship between the TAC and the geographical area, a mapping relationship between the TAI and the geographical area, or a mapping relationship between the CGI and the geographical area.

Optionally, as an embodiment, the core network device ignores seventh information sent by the access network device, the seventh information includes all TACs broadcast in a cell under the coverage of the access network device, and the TACs correspond to a serving network of the terminal.

Optionally, as an embodiment, the core network device ignores ninth information sent by the access network device, and the ninth information includes a single TAC broadcast in a cell under the coverage of the access network device.

Optionally, as an embodiment, the apparatus 1100 includes a sending module, configured to send eighth information to the access network device, where the eighth information includes the location information of the terminal subjected to security processing by the core network device.

Optionally, as an embodiment, the receiving module 1102 is further configured to subject the fifth information to security processing. The security processing includes at least one of deciphering and integrity verification.

For the apparatus 1100 according to this embodiment of this application, reference may be made to the process of the corresponding method 400 in embodiments of this application. In addition, the units/modules of the apparatus 1100 and the foregoing other operations and/or functions are respectively intended to implement the corresponding process of the method 400, and can achieve the same or equivalent technical effect. For brevity, details are not described herein again.

The apparatus for reporting or receiving location information provided in embodiments of this application can implement the processes implemented in the method embodiments in FIG. 2 to FIG. 8, and achieve the same technical effect. To avoid repetition, details are not described herein again.

Optionally, as shown in FIG. 12, an embodiment of this application further provides a communication device 1200, including a processor 1201 and a memory 1202. The memory 1202 stores a program or instructions executable in the processor 1201. For example, when the communication device 1200 is a terminal, the program or the instructions, when executed by the processor 1201, implement the steps of the foregoing embodiments of the method for reporting location information, and can achieve the same technical effect. When the communication device 1200 is a network side device, the program or the instructions, when executed by the processor 1201, implement the steps of the foregoing embodiments of the method for reporting or receiving location information, and can achieve the same technical effect. To avoid repetition, details are not described herein again.

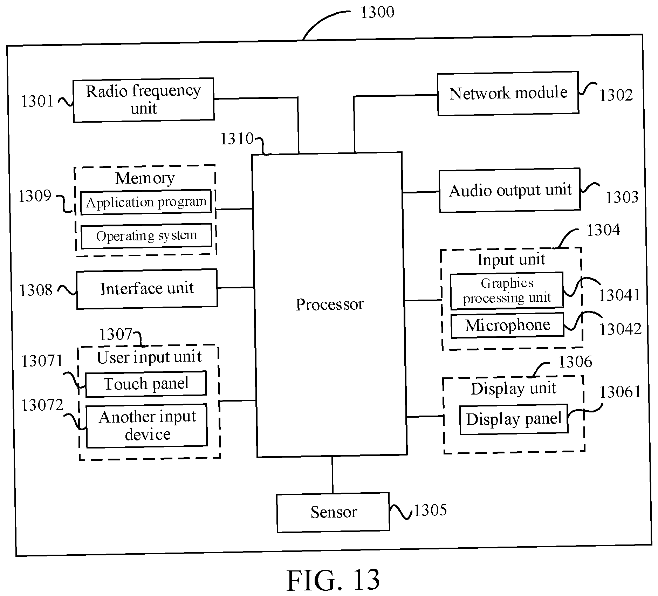

An embodiment of this application further provides a terminal, including a processor and a communication interface. The communication interface is configured to obtain first information, where the first information indicates the terminal to report location information of the terminal. Any one of the following is performed based on the first information: skipping reporting the location information of the terminal; or reporting the location information of the terminal, where access stratum AS security of the terminal is not used or the AS security is not activated. The terminal embodiment corresponds to the foregoing method embodiment of the terminal side. The implementation processes and implementations of the foregoing method embodiments are all applicable to the terminal embodiment and can achieve the same technical effect. Specifically, FIG. 13 is a schematic diagram of a hardware structure of a terminal for implementing an embodiment of this application.

The terminal 1300 includes, but is not limited to, at least some components of a radio frequency unit 1301, a network module 1302, an audio output unit 1303, an input unit 1304, a sensor 1305, a display unit 1306, a user input unit 1307, an interface unit 1308, a memory 1309, and a processor 1310.

A person skilled in the art may understand that the terminal 1300 may further include a power supply (for example, a battery) that supplies power to the components. The power supply may be logically connected to the processor 1310 through a power management system, thereby implementing functions such as management of charging, discharging, and power consumption through the power management system. The terminal structure shown in FIG. 13 constitutes no limitation on the terminal, and the terminal may include more or fewer components than those shown in the figure, or some merged components, or different component arrangements. Details are not described herein again.

It should be understood that in embodiments of this application, the input unit 1304 may include a graphics processing unit (Graphics Processing Unit, GPU) 13041 and a microphone 13042. The graphics processing unit 13041 processes image data of a static picture or a video obtained by an image capturing apparatus (for example, a camera) in a video capturing mode or an image capturing mode. The display unit 1306 may include a display panel 13061. The display panel 13061 may be configured in a form such as a liquid crystal display or an organic light-emitting diode. The user input unit 1307 includes at least one of a touch panel 13071 and another input device 13072. The touch panel 13071 is also referred to as a touchscreen. The touch panel 13071 may include two parts: a touch detection apparatus and a touch controller. The another input device 13072 may include, but is not limited to, a physical keyboard, a functional key (such as a volume control key or a power button), a track ball, a mouse, and a joystick. Details are not described herein.

In embodiments of this application, the radio frequency unit 1301 receives downlink data from a network side device and may transmit the downlink data to the processor 1310 for processing. In addition, the radio frequency unit 1301 may send uplink data to the network side device. Generally, the radio frequency unit 1301 includes, but is not limited to, an antenna, an amplifier, a transceiver, a coupler, a low noise amplifier, a duplexer, and the like.

The memory 1309 may be configured to store a software program or instructions and various data. The memory 1309 may mainly include a first storage area storing a program or instructions and a second storage area storing data. The first storage area may store an operating system, an application program, or instructions required by at least one function (such as a sound playing function and an image displaying function), and the like. In addition, the memory 1309 may include a volatile memory or a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDRSDRAM), an enhanced synchronous dynamic random access memory (Enhanced SDRAM, ESDRAM), a synch link dynamic random access memory (Synch link DRAM, SLDRAM), and a direct rambus random access memory (Direct Rambus RAM, DRRAM). The memory 1309 in embodiments of this application includes, but is not limited to, these and any other suitable type of memories.

The processor 1310 may include one or more processing units. Optionally, the processor 1310 integrates an application processor and a modem processor. The application processor mainly processes operations related to an operating system, a user interface, an application program, and the like. The modem processor mainly processes wireless communication signals, and is, for example, a baseband processor. It may be understood that the modem processor may alternatively not be integrated into the processor 1310.

The radio frequency unit 1301 may be configured to obtain first information, where the first information indicates a terminal to report location information of the terminal; and to perform any one of the following based on the first information: skipping reporting the location information of the terminal; or reporting the location information of the terminal, where access stratum AS security of the terminal is not used or the AS security is not activated.

In embodiments of this application, when the AS security of the terminal is not used or the AS security is not activated, if a network indicates the terminal to report the location information, the terminal may not report the location information, which is beneficial to protecting privacy of the terminal. The terminal may further report the location information, which is beneficial to assisting a network side in performing mobility management on the terminal, thereby improving performance of a communication system.

It may be understood that for the implementation process of each implementation mentioned in this embodiment, reference may be made to the relevant description of the embodiment of the method for reporting or receiving location information, and the same or corresponding technical effects are achieved. To avoid repetition, details are not described herein again.

An embodiment of this application further provides a network side device, including a processor and a communication interface. The communication interface is configured to send first information, where the first information indicates a terminal to report location information of the terminal, and the reporting, by the terminal, the location information of the terminal includes: reporting the location information of the terminal when AS security of the terminal is not used or the AS security is not activated; or the communication interface is configured to receive fifth information from an access network device, where the fifth information includes the location information of the terminal, and the AS security of the terminal is not used or the AS security is not activated. An embodiment of the network side device corresponds to the foregoing method embodiment of the network side device. Each implementation process and implementation of the foregoing method embodiment can be applied to the embodiment of the network side device, and can achieve the same technical effect.

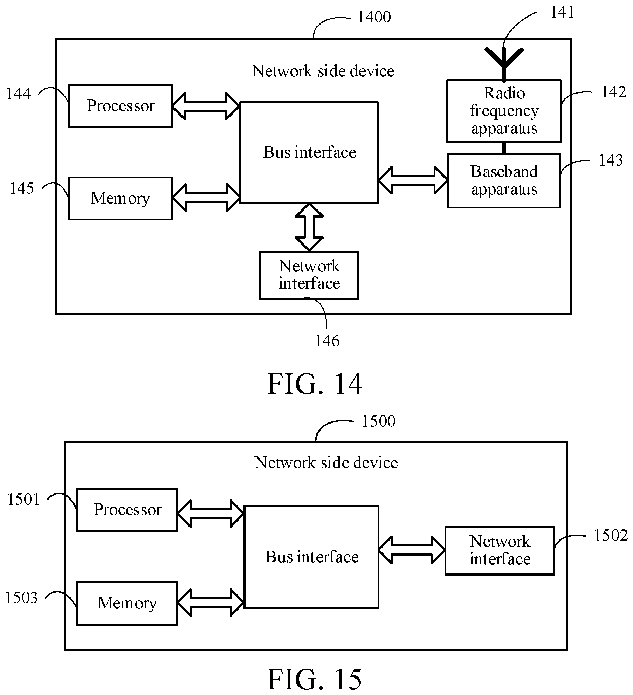

An embodiment of this application further provides a network side device (which may be an access network device). As shown in FIG. 14, the network side device 1400 includes: an antenna 141, a radio frequency apparatus 142, a baseband apparatus 143, a processor 144, and a memory 145. The antenna 141 is connected to the radio frequency apparatus 142. In an uplink direction, the radio frequency apparatus 142 receives information through the antenna 141 and sends the received information to the baseband apparatus 143 for processing. In a downlink direction, the baseband apparatus 143 processes to-be-sent information and sends the processed to-be-sent information to the radio frequency apparatus 142. The radio frequency apparatus 142 processes the received information and then sends the processed received information through the antenna 141.

The method performed by the network side device in the foregoing embodiment may be implemented in the baseband apparatus 143. The baseband apparatus 143 includes a baseband processor.

The baseband apparatus 143 may include, for example, at least one baseband board. The baseband board is provided with a plurality of chips. As shown in FIG. 14, one of the chips is, for example, a baseband processor and is connected to the memory 145 through a bus interface, to call a program in the memory 145 to perform the operations of the network device shown in the foregoing method embodiments.

The network side device may further include a network interface 146, and the interface, for example, is a common public radio interface (Common Public Radio Interface, CPRI).

The network side device 1400 in embodiments of this application further includes: instructions or a program stored in the memory 145 and executable in the processor 144. The processor 144 calls the instructions or the program in the memory 145 to perform the method performed by each module shown in FIG. 10 and achieves the same technical effect. To avoid repetition, details are not described herein.

An embodiment of this application further provides a network side device (which may be a core network device). As shown in FIG. 15, the network side device 1500 includes: a processor 1501, a network interface 1502, and a memory 1503. The network interface 1502 is, for example, a common public radio interface (Common Public Radio Interface, CPRI).

Specifically, the network side device 1500 in embodiments of the present invention further includes: instructions or a program stored in the memory 1503 and executable in the processor 1501. The processor 1501 invokes the instructions or the program in the memory 1503 to perform the method executed by each module shown in FIG. 11 and achieves the same technical effect. To avoid repetition, details are not described herein.

An embodiment of this application further provides a readable storage medium. The readable storage medium stores a program or instructions. The program or the instructions, when executed by a processor, implement the processes of the foregoing embodiments of the method for reporting or receiving location information, and can achieve the same technical effect. To avoid repetition, details are not described herein.

The processor is a processor in the terminal described in the foregoing embodiments. The readable storage medium may be non-volatile, or may be non-transient. The readable storage medium includes a computer-readable storage medium, such as a computer read-only memory ROM, a random access memory RAM, a magnetic disk, or an optical disc. In some examples, the readable storage medium may be a non-transitory readable storage medium.

An embodiment of this application further provides a chip. The chip includes a processor and a communication interface. The communication interface is coupled to the processor. The processor is configured to run a program or instructions to implement the processes of the foregoing embodiments of the method for reporting or receiving location information and can achieve the same technical effect. To avoid repetition, details are not described herein.

It should be understood that the chip mentioned in embodiments of this application may also be referred to as a system level chip, a system chip, a chip system, a system on chip, or the like.

An embodiment of this application further provides a computer program/program product. The computer program/program product is stored in a storage medium. The computer program/program product is executed by at least one processor to implement the processes of embodiments of the method for reporting or receiving location information, and can achieve the same technical effect. To avoid repetition, details are not described herein again.

An embodiment of this application further provides a system for reporting location information, including: a terminal and a network side device. The terminal may be configured to perform steps of the foregoing method for reporting or receiving location information, and the network side device may be configured to perform the steps of the foregoing method for reporting or receiving location information.

It should be noted that in this specification, terms "comprise", "include" or any other variants herein are intended to encompass non-exclusive inclusion, so that a process, a method, an article, or an apparatus including a series of elements not only include those elements, but also includes another element not listed explicitly or includes intrinsic elements for the process, the method, the article, or the apparatus. Without any further limitation, an element defined by the phrase "include one ..." does not exclude the existence of an additional same element in the process, the method, the article, or the apparatus that includes the element. In addition, it should be noted that the scope of the method and the apparatus in the implementations of this application is not limited to function execution in the order shown or discussed, and may further include function execution in a substantially simultaneous manner or in a reverse order based on the involved functions. For example, the described method may be performed in an order different from the described order, and various steps may also be added, omitted, or combined. In addition, features described with reference to some examples may be combined in another example.

According to the descriptions of the foregoing implementations, a person skilled in the art may clearly understand that the method in the foregoing embodiments may be implemented by a computer software product with a necessary universal hardware platform, or may certainly be implemented by hardware. The computer software product is stored in a storage medium (for example, a ROM, a RAM, a magnetic disk, or an optical disc), and includes several instructions, to enable a terminal or a network side device to perform the methods described in embodiments of this application.

Although embodiments of this application are described above with reference to the accompanying drawings, this application is not limited to the foregoing specific implementations. The foregoing specific implementations are illustrative only but not restrictive. With the enlightenment of this application, a person of ordinary skill in the art may make many forms of implementations without departing from the concept of this application and the protection scope of the claims. These implementations fall within the protection of this application.

## Claims

1. A method for reporting location information, comprising:
obtaining, by a terminal, first information, wherein the first information indicates the terminal to report location information of the terminal; and
performing, by the terminal, any one of the following based on the first information:
skipping reporting the location information of the terminal; or
reporting the location information of the terminal,
wherein access stratum AS security of the terminal is not used or the AS security is not activated.

2. The method according to claim 1, wherein the reporting location information of the terminal comprises: reporting the location information of the terminal in a first process,
wherein the first process comprises at least one of a radio resource control RRC setup procedure, an RRC connection resume procedure, an RRC connection reestablishment procedure, a handover procedure, or an early data transmission EDT procedure.

3. The method according to claim 1 or 2, wherein the first information comprises a first indication, and the first indication indicates one of the following:
a network requests the terminal to report the location information; or
the network enables the terminal to report the location information.

4. The method according to any one of claims 1 to 3, wherein the first information comprises at least one of the following:
first area information, wherein the first area information indicates an area in which the terminal needs to report the location information of the terminal; or
service-related information, wherein the service-related information indicates under what service scenarios is it required to report the location information by the terminal.

5. The method according to claim 4, wherein
the first area information comprises at least one of the following: at least one tracking area identifier TAI; at least one cell global identifier CGI; at least one piece of second information; at least one geographical location area; or at least one radio access network RAN area, and the second information comprises carrier frequency information and at least one physical cell identifier PCI; and
the service-related information indicates at least one of the following: an emergency service, a high-priority access service, a mobile terminating-access service, a mobile originating-signalling service, a mobile originating-data service, a delay-tolerant access service, a voice call service, a delay-sensitive service, a conversational service, a streaming service, an interactive service, or a background service.

6. The method according to any one of claims 1 to 5, wherein the first information is carried via system information or a paging message or dedicated signaling.

7. The method according to claim 6, wherein that the first information is carried via the system information comprises:
the first information is carried via a system information block SIB1 or a first system information block, wherein the first system information block comprises satellite assistance information.

8. The method according to claim 7, wherein that the first information is carried via the SIB1 comprises: the first information is carried via a first field in the SIB1, and one of the following is satisfied:
the first field is parallel to a second field in the SIB1;
the first field is comprised in the second field, the first field is common for all networks, and the network comprises at least one of a public land mobile network PLMN or a non-public network NPN; or
the first field is comprised in the second field, the first field is dedicated to each network, and the network comprises at least one of the PLMN or the NPN; and
the second field indicates cell access-related information.

9. The method according to claim 7, wherein that the first information is carried via the first system information block comprises: the first information is carried via a third field in the first system information block, and one of the following is satisfied:
the third field is parallel to a fourth field, or
the third field is comprised in the fourth field,
wherein the fourth field indicates a satellite-related parameter required for accessing a serving cell.

10. The method according to any one of claims 1 to 9, wherein the method further comprises: performing, by the terminal, at least one of the following when the terminal obtains the first information from a first cell and a first condition is satisfied:
considering that the first cell is a suitable cell;
considering that the first cell is a candidate cell for cell selection or reselection; or
considering that the first cell is not barred, wherein
the first condition comprises at least one of the following:
the terminal has a first capability;
the terminal decides to report the location information of the terminal;
the terminal does not wish to report the location information of the terminal; or
the location information of the terminal is available.

11. The method according to any one of claims 1 to 9, wherein the method further comprises: performing, by the terminal, at least one of the following when the terminal obtains the first information from a first cell and a second condition is satisfied:
considering that the first cell is not a suitable cell;
considering that the first cell is not a candidate cell for cell selection or reselection;
considering that the first cell is barred;
considering that the first cell is barred within a first time; or
considering that a limited service is available only on the first cell; and
the second condition comprises at least one of the following:
the terminal does not have a first capability;
the terminal decides not to report the location information of the terminal;
the terminal does not wish to report the location information of the terminal; or
the location information of the terminal is not available.

12. The method according to claim 10 or 11, wherein the first capability comprises at least one of the following:
a capability of reporting the location information of the terminal when the AS security is not used or the AS security is not activated; or
a capability of reporting the location information of the terminal in the first process, wherein the first process comprises at least one of the RRC setup procedure, the RRC connection resume procedure, the RRC connection reestablishment procedure, the handover procedure, or the EDT procedure.

13. The method according to any one of claims 1 to 12, wherein when the location information of the terminal is not reported, the method further comprises: sending, by the terminal, third information, wherein the third information indicates at least one of the following:
the terminal does not wish to report the location information of the terminal;
the terminal decides not to report the location information of the terminal; or
the location information of the terminal is not available.

14. The method according to claim 13, wherein the third information comprises at least one of the following: information about a second time, wherein the information about the second time indicates a time when the terminal does not wish to report the location information of the terminal, or a time when the terminal decides not to report the location information of the terminal, or a time when the location information of the terminal is not available; or second area information, wherein the second area information indicates an area in which the terminal does not wish to report the location information of the terminal, or an area in which the terminal decides not to report the location information of the terminal, or an area in which the location information of the terminal is not available.

15. The method according to claim 13, wherein the method further comprises: indicating, by an NAS of the terminal, the third information to an AS of the terminal.

16. The method according to any one of claims 1 to 15, wherein after the obtaining, by the terminal, first information, the method further comprises: sending, by the AS of the terminal, fourth information to the NAS of the terminal, wherein the fourth information comprises the first information or a second indication, and the second indication indicates at least one of the following:
the NAS of the terminal is requested to perform security processing on the location information of the terminal; or
the terminal needs to send the location information of the terminal.

17. The method according to claim 16, wherein the sending, by the AS of the terminal, the fourth information to the NAS of the terminal comprises one of the following:
sending, by the AS of the terminal, the fourth information to the NAS of the terminal when the first information is common for all networks, wherein the network comprises at least one of the PLMN or the NPN; or
sending, by the AS of the terminal, the first information corresponding to a first network when the first information is specific to each network, wherein the network comprises at least one of the PLMN or the NPN, and the first network is a network selected by or registered with the terminal.

18. The method according to any one of claims 1 to 10, wherein the reporting the location information of the terminal comprises:
receiving, by an AS of the terminal, fifth information sent by an NAS of the terminal, wherein the fifth information comprises the location information of the terminal on which security processing has been performed by the NAS of the terminal; and the security processing performed by the NAS comprises at least one of ciphering or integrity verification; and
sending, by the terminal, the fifth information, wherein the fifth information is carried via an RRC message, and the fifth information comprises the location information of the terminal on which the security processing has been performed by the NAS of the terminal.

19. The method according to claim 18, wherein the method further comprises: obtaining, by the NAS of the terminal, the location information of the terminal from an upper layer.

20. The method according to claim 18, wherein the method further comprises:
obtaining, by the AS of the terminal, the location information of the terminal from an upper layer; and
sending, by the AS of the terminal, sixth information to the NAS of the terminal, wherein the sixth information comprises the location information of the terminal.

21. The method according to claim 20, wherein
the sixth information further comprises a third indication, and the third indication indicates the NAS of the terminal to perform security processing on the location information of the terminal.

22. The method according to claim 18, 19, or 20, wherein that the fifth information is carried via the RRC message comprises at least one of the following:
the fifth information is encapsulated into a container;
the fifth information is concatenated with the RRC message; or
the fifth information is loaded into the RRC message.

23. The method according to claim 18, wherein
the RRC message is at least one of an RRCSetupComplete message, an RRC connection resume completion message, an RRC connection reestablishment completion message, an RRC connection reconfiguration completion message, an RRC setup request message, an RRC connection resume request message, an RRC connection reestablishment request message, or an RRC early data request message.

24. A method for reporting location information, comprising:
sending, by an access network device, first information, wherein the first information indicates a terminal to report location information of the terminal,
wherein the reporting, by a terminal, location information of the terminal comprises: reporting the location information of the terminal when AS security of the terminal is not used or the AS security is not activated.

25. The method according to claim 24, wherein the method further comprises:
receiving, by the access network device, fifth information, wherein the fifth information is carried via an RRC message, and the fifth information comprises the location information of the terminal; and
sending, by the access network device, the fifth information to a core network device.

26. The method according to claim 24, wherein the method further comprises:
receiving, by the access network device, the location information of the terminal in a first process,
wherein the first process comprises at least one of an RRC setup procedure, an RRC connection resume procedure, an RRC connection reestablishment procedure, a handover procedure, or an early data transmission EDT procedure.

27. The method according to claim 24, wherein UE location information sent by the access network device to a core network device does not comprise seventh information; and
the seventh information comprises all TACs broadcast in a cell under the coverage of the access network device, and the TACs correspond to a serving network of the terminal.

28. The method according to claim 25, wherein the method further comprises:
receiving, by the access network device, eighth information from the core network device, wherein the eighth information comprises the location information of the terminal subjected to security processing by the core network device, and the security processing comprises at least one of deciphering or integrity verification;
determining, by the access network device based on the location information of the terminal and a first mapping relationship, information about an area where the terminal is located; and
sending, to the core network device by the access network device, the information about the area where the terminal is located.

29. The method according to claim 28, wherein
the information about the area where the terminal is located comprises at least one of the following: a mapped cell identifier, a TAC where the terminal is located, a TAI where the terminal is located, or a CGI where the terminal is located; and
the first mapping relationship comprises at least one of the following: a mapping relationship between a cell identifier and a geographical area, a mapping relationship between the TAC and the geographical area, a mapping relationship between the TAI and the geographical area, or a mapping relationship between the CGI and the geographical area.

30. The method according to claim 25, wherein the method further comprises:
sending, by the access network device, a fourth indication to the core network device, wherein the fourth indication indicates the core network device to subject the fifth information to security processing.

31. A method for receiving location information, comprising:
receiving, by a core network device, fifth information from an access network device, wherein the fifth information comprises location information of a terminal; and
AS security of the terminal is not used or the AS security is not activated.

32. The method according to claim 31, wherein the method further comprises:
determining, by the core network device based on the location information of the terminal and a second mapping relationship, information about an area where the terminal is located.

33. The method according to claim 32, wherein
the information about the area where the terminal is located comprises at least one of the following: a mapped cell identifier, a TAC where the terminal is located, a TAI where the terminal is located, or a CGI where the terminal is located; and
the second mapping relationship comprises at least one of the following: a mapping relationship between a cell identifier and a geographical area, a mapping relationship between the TAC and the geographical area, a mapping relationship between the TAI and the geographical area, or a mapping relationship between the CGI and the geographical area.

34. The method according to claim 31, wherein the core network device ignores seventh information sent by the access network device, the seventh information comprises all TACs broadcast in a cell under the coverage of the access network device, and the TACs correspond to a serving network of the terminal.

35. The method according to claim 31, wherein the method further comprises:
ignoring, by the core network device, ninth information sent by the access network device, wherein the ninth information comprises a single TAC broadcast in a cell under the coverage of the access network device.

36. The method according to any one of claims 31 to 35, wherein the method further comprises:
sending, by the core network device, eighth information to the access network device, wherein the eighth information comprises the location information of the terminal subjected to security processing by the core network device.

37. The method according to any one of claims 31 to 36, wherein the method further comprises:
subjecting the fifth information to the security processing by the core network device, wherein the security processing comprises at least one of deciphering or integrity verification.

38. An apparatus for reporting location information, applied to a terminal, the apparatus comprising:
an obtaining module, configured to obtain first information, wherein the first information indicates the terminal to report location information of the terminal; and
a processing module, configured to perform any one of the following based on the first information:
skipping reporting the location information of the terminal; or
reporting the location information of the terminal,
wherein access stratum AS security of the terminal is not used or the AS security is not activated.

39. The apparatus according to claim 38, wherein when the obtaining module obtains the first information from a first cell and a first condition is satisfied, the processing module is further configured to perform at least one of the following:
considering that the first cell is a suitable cell;
considering that the first cell is a candidate cell for cell selection or reselection; or
considering that the first cell is not barred, wherein
the first condition comprises at least one of the following:
the terminal has a first capability;
the terminal decides to report the location information of the terminal;
the terminal does not wish to report the location information of the terminal; or
the location information of the terminal is available.

40. The apparatus according to claim 38, wherein when the obtaining module obtains the first information from a first cell and a second condition is satisfied, the processing module is further configured to perform at least one of the following:
considering that the first cell is not a suitable cell;
considering that the first cell is not a candidate cell for cell selection or reselection;
considering that the first cell is barred;
considering that the first cell is barred within a first time; or
considering that a limited service is available only on the first cell; and
the second condition comprises at least one of the following:
the terminal does not have a first capability;
the terminal decides not to report the location information of the terminal;
the terminal does not wish to report the location information of the terminal; or
the location information of the terminal is not available.

41. The apparatus according to any one of claims 38 to 40, wherein when the location information of the terminal is not reported, the processing module is further configured to send third information, and the third information indicates at least one of the following:
the terminal does not wish to report the location information of the terminal;
the terminal decides not to report the location information of the terminal; or
the location information of the terminal is not available.

42. An apparatus for reporting location information, applied to an access network device, the apparatus comprising:
a sending module, configured to send first information, wherein the first information indicates a terminal to report location information of the terminal,
wherein the reporting, by a terminal, location information of the terminal comprises: reporting the location information of the terminal when AS security of the terminal is not used or the AS security is not activated.

43. The apparatus according to claim 42, further comprising
a receiving module, configured to receive fifth information, wherein the fifth information is carried via an RRC message, and the fifth information comprises the location information of the terminal; and
the sending module is further configured to send the fifth information to a core network device.

44. The apparatus according to claim 42, further comprising
a receiving module, configured to: receive eighth information from the core network device, wherein the eighth information comprises the location information of the terminal subjected to security processing by the core network device, and the security processing comprises at least one of deciphering or integrity verification; and
determine, based on the location information of the terminal and a first mapping relationship, information about an area where the terminal is located; and
the sending module is further configured to send, to the core network device, the information about the area where the terminal is located.

45. An apparatus for receiving location information, applied to a core network device, the apparatus comprising:
a receiving module, configured to receive fifth information from an access network device, wherein the fifth information comprises location information of a terminal, and
AS security of the terminal is not used or the AS security is not activated.

46. The apparatus according to claim 45, wherein
the receiving module is further configured to determine, based on the location information of the terminal and a second mapping relationship, information about an area where the terminal is located.

47. A terminal, comprising a processor and a memory, wherein the memory stores a program or instructions executable in the processor, and the program or the instructions, when executed by the processor, implement the steps of the method according to any one of claims 1 to 23.

48. A network side device, comprising a processor and a memory, wherein the memory stores a program or instructions executable in the processor, and the program or the instructions, when executed by the processor, implement the steps of the method according to any one of claims 24 to 37.

49. A readable storage medium, wherein the readable storage medium stores a program or instructions, and the program or the instructions, when executed by a processor, implement the steps of the method according to any one of claims 1 to 37.
